(19) **Europäisches Patentamt / European Patent Office / Office européen des brevets**

(11) **EP 4 753 192 A2**

(12) **EUROPEAN PATENT APPLICATION**

(43) Date of publication:
03.06.2026   Bulletin 2026/23

(21) Application number: 26172440.5

(22) Date of filing: 19.01.2023

(51) International Patent Classification (IPC):
**H04L 1/1867** *(2023.01)*

(52) Cooperative Patent Classification (CPC):
**H04L 5/0055; H04L 1/1854; H04L 1/1896;
H04L 5/0094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.02.2022   US 202263309488 P**

(62) Document number(s) of the earlier application(s) in
accordance with Art. 76 EPC:
**23152485.1 / 4 228 194**

(71) Applicant: **LG Electronics Inc.
Yeongdeungpo-gu
Seoul 07336 (KR)**

(72) Inventors:
• **KIM, Jaehyung
06772 Seoul (KR)**

**Description**

[Technical Field]

The present disclosure relates to a wireless communication system, and in more detail, relates to a method and an apparatus of transmitting and receiving a physical uplink control channel (PUCCH) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving a physical uplink control channel (PUCCH) for a specific type of terminal (e.g., a reduced capability terminal).

In addition, an additional technical object of the present disclosure is to provide a method and apparatus for transmitting and receiving a message for a specific type of terminal (e.g., a reduced capability terminal) to perform a random access procedure.

The technical objects to be achieved by the present disclosure are not limited to the above-described technical objects, and other technical objects which are not described herein will be clearly understood by those skilled in the pertinent art from the following description.

[Technical Solution]

A method of transmitting a physical uplink control channel (PUCCH) in a wireless communication system according to an aspect of the present disclosure may include: receiving, from a base station, system information, wherein the system information includes first information on an additional physical resource block (PRB) offset in PRB mapping for a PUCCH resource and second information on whether a PRB index in the PRB mapping is counted in increasing order from a lower edge or in decreasing order from an upper edge of an initial uplink bandwidth part (BWP) of the recap terminal; receiving, from the base station, downlink control information (DCI) scheduling a physical downlink shared channel (PDSCH); receiving, from the base station, the PDSCH; and transmitting, to the base station, hybrid automatic repeat request (HARQ)-acknowledgement (ACK) information related to the PDSCH in the PUCCH. Based on a frequency hopping for transmission of the PUCCH being disabled, an PRB index for transmission of the PUCCH may be determined using the additional PRB offset provided by the first information based on second information.

A method of receiving a physical uplink control channel (PUCCH) in a wireless communication system according to an additional aspect of the present disclosure may include: transmitting, to a reduced capability (redcap) terminal, system information, wherein the system information includes first information on an additional physical resource block (PRB) offset in PRB mapping for a PUCCH resource and second information on whether a PRB index in the PRB mapping is counted in increasing order from a lower edge or in decreasing order from an upper edge of an initial uplink bandwidth part (BWP) of the recap terminal; transmitting, to the redcap terminal, downlink control information (DCI) scheduling a physical downlink shared channel (PDSCH); transmitting, to the redcap terminal, the PDSCH; and receiving, from the redcap terminal, hybrid automatic repeat request (HARQ)-acknowledgement (ACK) information related to the PDSCH in the PUCCH. Based on a frequency hopping for transmission of the PUCCH being disabled, an PRB index for transmission of the PUCCH may be determined using the additional PRB offset provided by the first information based on second information.

[Advantageous Effects]

According to an embodiment of the present disclosure, even if an initial uplink bandwidth part of a normal terminal and an initial uplink bandwidth part of a specific type of terminal (e.g., reduced capability terminal) overlap, it is possible to prevent a problem in which resources for uplink transmission of a normal terminal are fragmented.

In addition, according to an embodiment of the present disclosure, even if an initial uplink bandwidth part of a normal terminal and an initial uplink bandwidth part of a specific type of terminal (e.g., reduced capability terminal) overlap, it is possible to prevent a collision between uplink transmission of a normal terminal and uplink transmission of a specific type of terminal, thereby preventing interference and performance degradation.

In addition, according to an embodiment of the present disclosure, operations such as a random access procedure of a specific type of terminal (e.g., reduced capability terminal) can be smoothly supported.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a system information acquisition process.
FIG. 8 illustrates a random access process in a wireless communication system to which the present disclosure may be applied.
FIG. 9 illustrates a two-step random access process in a wireless communication system to which the present disclosure may be applied.
FIG. 10 illustrates a procedure for reporting a device type of a redcap device in a wireless communication system to which the present disclosure may be applied.
FIG. 11 is a diagram illustrating frequency resource allocation of an Msg3 PUSCH without frequency hopping according to an embodiment of the present disclosure.
FIG. 12 is a diagram illustrating frequency resource allocation of Msg3 PUSCH considering frequency hopping according to an embodiment of the present disclosure.
FIG. 13 is a diagram illustrating frequency resource allocation of Msg3 PUSCH considering frequency hopping according to an embodiment of the present disclosure.
FIG. 14 is a diagram illustrating frequency resource allocation of Msg3 PUSCH considering frequency hopping according to an embodiment of the present disclosure.
FIG. 15 is a diagram illustrating frequency resource allocation of Msg3 PUSCH to which MOD operation is applied according to an embodiment of the present disclosure.
FIG. 16 is a diagram illustrating frequency resource allocation of Msg3 PUSCH to which mirroring is applied according to an embodiment of the present disclosure.
FIG. 17 is a diagram illustrating configuration of an initial UL BWP of a normal UE and an initial BWP of a redcap UE according to an embodiment of the present disclosure.
FIG. 18 illustrates PUCCH transmission of a redcap UE using frequency hopping according to an embodiment of the present disclosure.
FIG. 19 illustrates PUCCH transmission of a redcap UE without frequency hopping according to an embodiment of the present disclosure.
FIG. 20 illustrates PUCCH transmission of a redcap UE without frequency hopping according to an embodiment of the present disclosure.
FIG. 21 illustrates PUCCH transmission of a redcap UE without frequency hopping according to an embodiment of the present disclosure.

FIG. 22 illustrates PUCCH transmission of a redcap UE without frequency hopping according to an embodiment of the present disclosure.

FIG. 23 illustrates PUCCH transmission of a redcap UE without frequency hopping according to an embodiment of the present disclosure.

FIG. 24 illustrates PUCCH transmission of a redcap UE without frequency hopping according to an embodiment of the present disclosure.

FIG. 25 illustrates PUCCH transmission of a redcap UE without frequency hopping according to an embodiment of the present disclosure.

FIG. 26 is a diagram illustrating a signaling procedure between a base station and a terminal for a method for transmitting and receiving a PUCCH according to an embodiment of the present disclosure.

FIG. 27 is a diagram illustrating an operation of a UE for a method for transmitting and receiving a PUCCH according to an embodiment of the present disclosure.

FIG. 28 is a diagram illustrating an operation of a base station for a method for transmitting and receiving a PUCCH according to an embodiment of the present disclosure.

FIG. 29 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio

- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

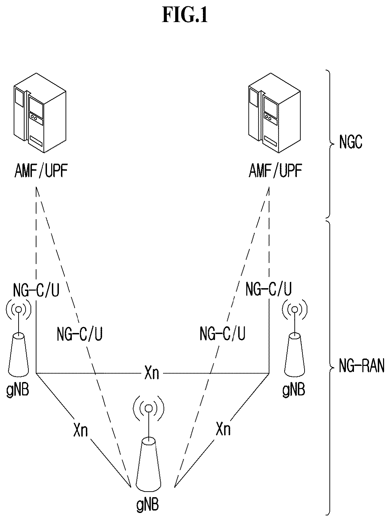

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

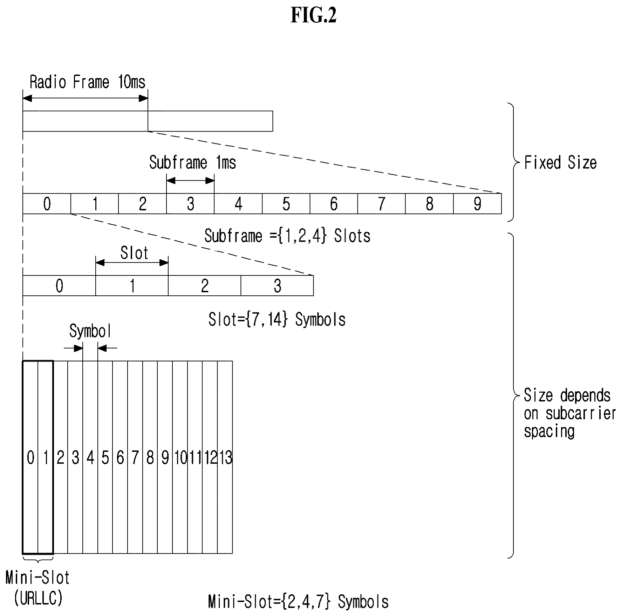

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, denseurban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 103$ Hz and $N_f$ is 4096. Downlink and uplink transmission is configured (organized) with a radio frame having a duration of $T_f=1/(\Delta f_{max}N_f/100) \cdot T_c=10ms$. Here, a radio frame is configured with 10 subframes having a duration of $T_{sf}=(\Delta f_{max}N_f/1000) \cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N\text{-symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

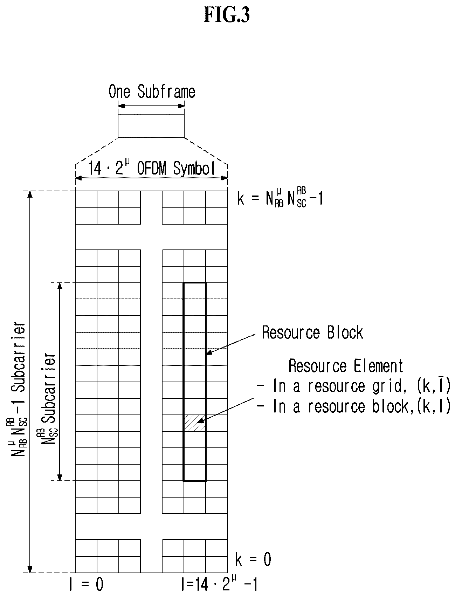

FIG. 3 illustrates a resource grid in a wireless communication system to which the present disclosure may be applied.

In reference to FIG. 3, it is illustratively described that a resource grid is configured with $N_{RB}^\mu N_{sc}^{RB}$ subcarriers in a frequency domain and one subframe is configured with $14 \cdot 2^\mu$ OFDM symbols, but it is not limited thereto. In an NR system, a transmitted signal is described by OFDM symbols of $2^\mu N_{symb}^{(\mu)}$ and one or more resource grids configured with

$N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, 1=0,..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

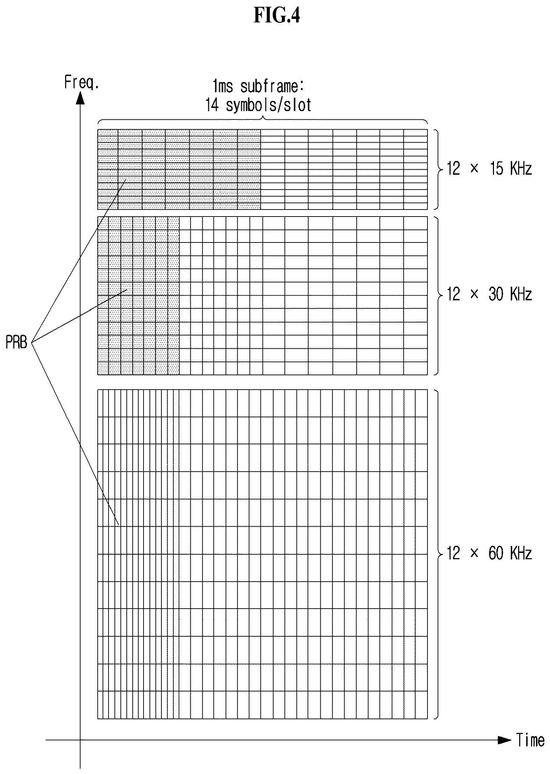

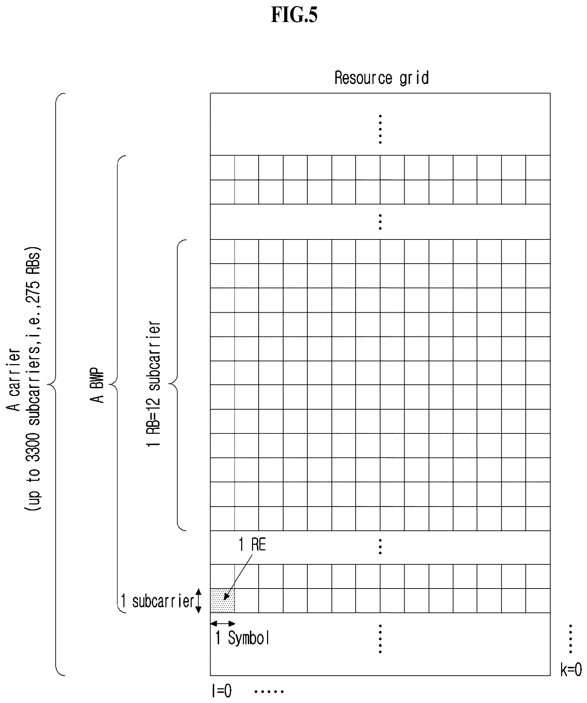

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

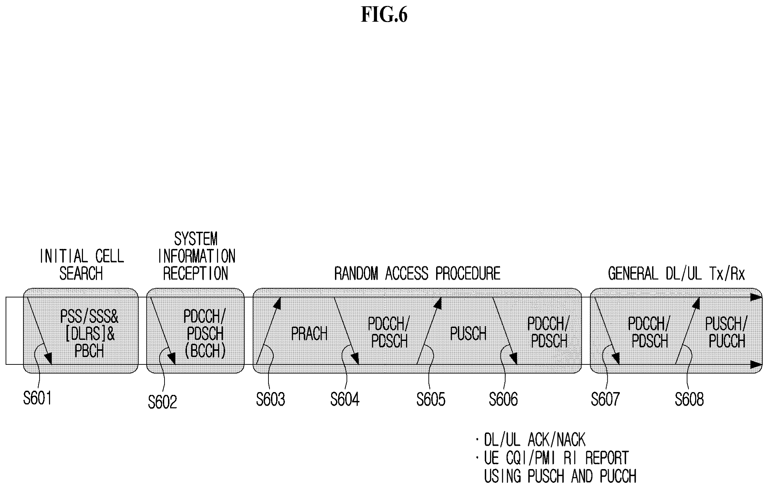

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

<u>System information acquisition</u>

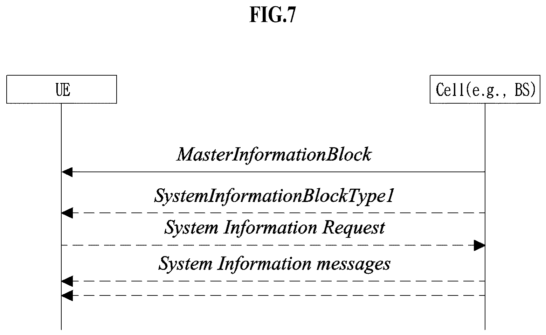

Figure 7 illustrates a system information acquisition process.

A UE may obtain access stratum (AS)/non-access stratum (NAS) information through a system information (SI) acquisition process. A SI acquisition process may be applied to a UE in an RRC idle (RRC_IDLE) state, an RRC inactive (RRC_INACTIVE) state, and an RRC connected (RRC_CONNECTED) state.

SI is divided into a master information block (MIB) and a plurality of system information blocks (SIB). SI other than an MIB may be referred to as Remaining Minimum System Information (RMSI) and Other System Information (OSI). RMSI corresponds to SIB1, and OSI refers to SIBs other than SIB2 and higher than SIB2. For details, the following may be referenced.

An MIB includes information/parameters related to SIB1 (SystemInformationBlockType1) reception and is transmitted through a PBCH of an SSB (SS/PBCH block). MIB information may include fields shown in Table 6.

Table 6 illustrates a portion of an MIB.

[Table 6]

| | |
|---|---|
| - subCarrierSpacingCommon | ENUMERATED {scs15or60, scs30or120}, |
| - ssb-SubcarrierOffset | INTEGER (0..15), |
| - pdcch-ConfigSIB1 | INTEGER (0..255), |

Table 7 illustrates a description of MIB fields illustrated in Table 6.

[Table 7]

| |
|---|
| pdcch-ConfigSIB1<br>The field pdcch-ConfigSIB1 determines a common ControlResourceSet (CORESET), a common search space and necessary PDCCH parameters. |

(continued)

| |
|---|
| If the field ssb-SubcarrierOffset indicates that SIB1 is absent, the field pdcch-ConfigSIB1 indicates the frequency positions where the UE may find SS/PBCH block with SIB1 or the frequency range where the network does not provide SS/PBCH block with SIB1 |
| ssb-SubcarrierOffset.<br><br>The field ssb-SubcarrierOffset corresponds to k SSB, which is the frequency domain offset (number of subcarriers) between SSB and the overall resource block grid.<br><br>The value range of the field ssb-SubcarrierOffset may be extended by an additional most significant bit encoded within PBCH.<br><br>The field ssb-SubcarrierOffset may indicate that this cell does not provide SIB1 and that there is hence no CORESET#0 configured in MIB. In this case, the field pdcch-ConfigSIB1 may indicate the frequency positions where the UE may (not) find a SS/PBCH with a control resource set and search space for SIB1. |
| subCarrierSpacingCommon<br><br>The field subCarrierSpacingCommon indicates subcarrier spacing for SIB1, Msg.2/4 and MsgB for initial access, paging and broadcast SI-messages. If the UE acquires this MIB on an FR1 carrier frequency, the value scs15or60 corresponds to 15 kHz and the value scs30or120 corresponds to 30 kHz. If the UE acquires this MIB on an FR2 carrier frequency, the value scs15or60 corresponds to 60 kHz and the value scs30or120 corresponds to 120 kHz. |

Upon initial cell selection, a UE assumes that half-frames with an SSB are repeated in a period of 20 ms. A UE may check whether a Control Resource Set (CORESET) exists for the Type0-PDCCH common search space based on an MIB. The Type0-PDCCH common search space is a type of PDCCH search space and is used to transmit a PDCCH for scheduling an SI message. When the Type0-PDCCH common search space exists, a UE may determine (i) a plurality of contiguous RBs and one or more contiguous symbols constituting a CORESET and (ii) a PDCCH occasion (i.e., time domain location for PDCCH reception) based on information in an MIB (e.g., pdcch-ConfigSIB1). Specifically, pdcch-ConfigSIB1 is 8-bit information, (i) is determined based on 4 bits of MSB (Most Significant Bit) (refer to 3GPP TS 38.213 Table 13-1~13-10), and (ii) is determined based on 4 bits of LSB (Least Significant Bit) (refer to 3GPP TS 38.213 Table 13-11~13-15).

As an example, information indicated by MSB 4 bits of pdcch-ConfigSIB1 is exemplified as follows.

A configuration of a CORESET for the Type0-PDCCH common search space is:

i) Define multiple tables according to subcarrier spacing and channel minimum bandwidth.
ii) Indicates a multiplexing pattern between an SS/PBCH block and a PDCCH/PDSCH.

- Pattern 1: All SCS combinations for FR1, all SCS combinations for FR2
- Pattern 2: Different SCS combinations for FR2 (except for the combination of 60 kHz for an initial DL BWP and 240 kHz SCS for a SS/PBCH block)
- Pattern 3: Same SCS combination for FR2 (for 120 kHz SCS)

iii) indicates the number of PRBs and OFDM symbols for a CORESET.

- $N_{RB}^{CORESET}$: number of RBs (i.e. {24, 48, 96})
- $N_{Symb}^{CORESET}$: number of symbols (i.e. {1, 2, 3})

iv) Indicates an offset (the number of RBs) between the first RB of an SS/PBCH block and the first RB of an RMSI CORESET.

- A range of an offset (number of RBs) is determined by the number of PRBs and sync raster0.
- Design to align a center of an SS/PBCH block and a center of an RMSI CORESET as close as possible.

When the Type0-PDCCH common search space does not exist, pdcch-ConfigSIB1 provides information on a frequency location where an SSB/SIB1 exists and a frequency range where an SSB/SIB1 does not exist.

In the case of initial cell selection, a UE may assume that a half frame with an SS/PBCH block occurs with a period of 2 frames. Upon detection of an SS/PBCH block, if $k_{SSB} \leq 23$ for FR1 (Sub-6 GHz; 450 to 6000 MHz) and $k_{SSB} \leq 11$ for FR2 (mm-Wave, 24250 to 52600 MHz), a UE determines that a control resource set for the Type0-PDCCH common search space exists. If $k_{SSB} > 23$ for FR1 and $k_{SSB} > 11$ for FR2, a UE determines that a control resource set for the Type0-PDCCH common search space does not exist. $k_{SSB}$ represents a frequency/subcarrier offset between subcarrier 0 of an SS/PBCH block and subcarrier 0 of a common resource block for an SSB. For FR2, only a maximum of 11 values can be applied. $k_{SSB}$ can be signaled through an MIB. An SIB1 includes information related to availability and scheduling (e.g., transmission period, SI-window size) of the remaining SIBs (hereinafter, SIBx, where x is an integer greater than or equal to 2). For example, an SIB1 may inform whether SIBx is periodically broadcast or provided at a request of a UE by an on-demand scheme. When SIBx is provided by an on-demand method, an SIB1 may include information necessary for a UE to perform an SI request. An SIB1 is transmitted through a PDSCH, a PDCCH scheduling the SIB1 is transmitted through the Type0-PDCCH common search space, and the SIB1 is transmitted through a PDSCH indicated by a PDCCH.

SIBx is included in an SI message and transmitted through a PDSCH. Each SI message is transmitted within a periodically occurring time window (i.e., SI-window).

Random access operation and related operation

When there is no PUSCH transmission resource (i.e., uplink grant) allocated by a base station, a UE may perform a random access operation. Random access of the NR system may be initiated 1) when a UE requests or resumes an RRC connection, 2) when a UE performs handover to a neighboring cell or adds a secondary cell group (SCG) (i.e., SCG addition), 3) When a UE perform a scheduling request to a base station, 4) when a base station indicates to a UE random access with a PDCCH order, 5) when a beam failure or RRC connection failure is detected.

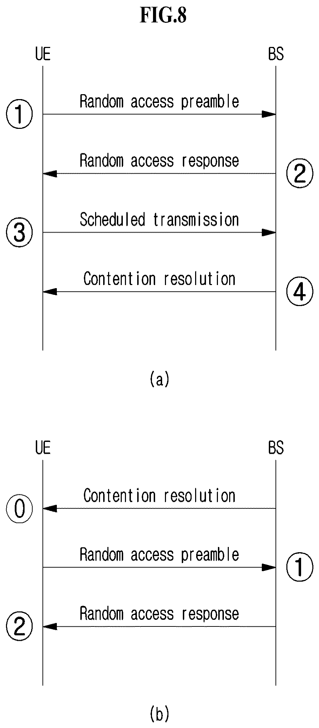

FIG. 8 illustrates a random access process in a wireless communication system to which the present disclosure may be applied. FIG. 8(a) exemplifies a contention-based random access process, and FIG. 8(b) exemplifies a dedicated random access process.

Referring to FIG. 8(a), a contention-based random access process includes the following 4 steps. Hereinafter, messages transmitted in steps 1 to 4 may be referred to as messages (Msg) 1 to 4, respectively.

- Step 1: A UE transmits a random access channel (RACH) preamble through a physical random access channel (PRACH).
- Step 2: A UE receives a random access response (RAR) from a base station through a downlink shared channel (DL-SCH).
- Step 3: A UE transmits a Layer 2/Layer 3 message to a base station through an uplink shared channel (UL-SCH).
- Step 4: A UE receives a contention resolution message from a base station through a DL-SCH.

A UE may receive information on random access from a base station through system information.

If random access is required, a UE transmits an RACH preamble to a base station as in step 1. A base station can distinguish each of random access preambles through a time/frequency resource through which an random access preamble is transmitted (i.e., RACH occasion (RO)) and a random access preamble index (PI).

When a base station receives a random access preamble from a terminal, the base station transmits a random access response (RAR) message to the terminal as in step 2. For reception of a random access response message, in a preconfigured time window (e.g., ra-ResponseWindow), a UE monitors a CRC-masked L1/L2 control channel (PDCCH) with an RA-RNTI (Random Access-RNTI), which includes scheduling information for a random access response message. A PDCCH masked with an RA-RNTI can be transmitted only through a common search space. When receiving a scheduling signal masked with an RA-RNTI, a UE may receive a random access response message from a PDSCH indicated by scheduling information. After that, a terminal checks whether there is random access response information indicated to it in a random access response message. Whether or not random access response information indicated to a UE exists can be confirmed by whether a random access preamble ID (RAPID) for a preamble transmitted by a terminal exists. An index of a preamble transmitted by a UE and a RAPID may be the same. Random access response information includes a corresponding random access preamble index, timing offset information for UL synchronization (e.g., timing advance command (TAC)), UL scheduling information for message 3 transmission (e.g., UL grant), and UE temporary identification information (e.g., TC-RNTI (Temporary-C-RNTI)).

A UE receiving random access response information transmits UL-SCH (Shared Channel) data (message 3) through a PUSCH according to UL scheduling information and a timing offset value, as in step 3. A time and frequency resource in which a PUSCH carrying message 3 is mapped/transmitted is defined as PO (PUSCH Occasion). Message 3 may include a UE's ID (or a UE's global ID). Alternatively, message 3 may include RRC connection request-related information (e.g., an RRCSetupRequest message) for initial access. Message 3 may also include a Buffer Status Report (BSR) on an amount of data available for transmission by a UE.

After receiving UL-SCH data, as in step 4, a base station transmits a contention resolution message (message 4) to a UE. When a UE receives a contention resolution message and contention is successfully resolved, a TC-RNTI is changed to a C-RNTI. Message 4 may include an ID of a UE and/or RRC connection related information (e.g., RRCSetup message). If information transmitted through message 3 and information received through message 4 do not match, or if message 4 is not received for a certain period of time, a UE may determine that contention resolution has failed and retransmit message 3.

Referring to FIG. 8(b), a dedicated random access process includes the following three steps. Hereinafter, messages transmitted in steps 0 to 2 may be referred to as messages (Msg) 0 to 2, respectively. A dedicated random access process may be triggered by using a PDCCH (hereinafter referred to as a PDCCH order) for instructing RACH preamble transmission by a base station.

- Step 0: A base station allocates a RACH preamble to a terminal through dedicated signaling.
- Step 1: A UE transmits a RACH preamble through a PRACH.
- Step 2: A UE receives a random access response (RAR) from a base station through a DL-SCH.

Operations of steps 1 to 2 of a dedicated random access process may be the same as steps 1 to 2 of a contention-based random access process.

In NR, DCI format 1_0 is used to initiate a non-contention based random access procedure with a PDCCH order. DCI format 1_0 is used to schedule a PDSCH in one DL cell. Meanwhile, when a Cyclic Redundancy Check (CRC) of DCI format 1_0 is scrambled with a C-RNTI and all bit values of a "Frequency domain resource assignment" field are 1, DCI format 1_0 is used as a PDCCH order indicating a random access process. In this case, fields of DCI format 1_0 are configured as follows.

- RA preamble index: 6 bits
- UL/SUL (Supplementary UL) indicator: 1 bit. When all bit values of a RA preamble index are not 0 and SUL is configured in a cell for a UE, a PRACH in a cell indicates a transmitted UL carrier. Otherwise, it is unused (reserved).
- SSB (Synchronization Signal/Physical Broadcast Channel) index: 6 bits. When all bit values of a RA preamble index are not 0, it indicates an SSB used to determine a RACH occasion for PRACH transmission. Otherwise, it is unused (reserved).
- PRACH mask index: 4 bits. When all bit values of a RA preamble index are not 0, a RACH occasion associated with an SSB indicated by an SSB index is indicated. Otherwise, it is unused (reserved).
- reserved: 10 bits

When DCI format 1_0 does not correspond to a PDCCH order, DCI format 1_0 is configured with fields used for scheduling a PDSCH (e.g., Time domain resource assignment (TDRA), Modulation and Coding Scheme (MCS), HARQ process number, PDSCH-to-HARQ_feedback timing indicator, etc.).

In NR systems, lower latency than existing systems may be required. In addition, if a random access process occurs in a U-band, a random access process is terminated and contention is resolved only when a UE and a base station sequentially succeed in LBT in all of a 4-step random access process. If LBT fails in any step of a 4-step random access process, resource efficiency is lowered and latency is increased. In particular, if LBT fails in a scheduling/transmission process associated with Message 2 or Message 3, resource efficiency reduction and latency increase may occur significantly. Even in an L-band random access process, a low-latency random access process may be required in various scenarios of the NR system. Therefore, a 2-step random access process can also be performed on an L-band.

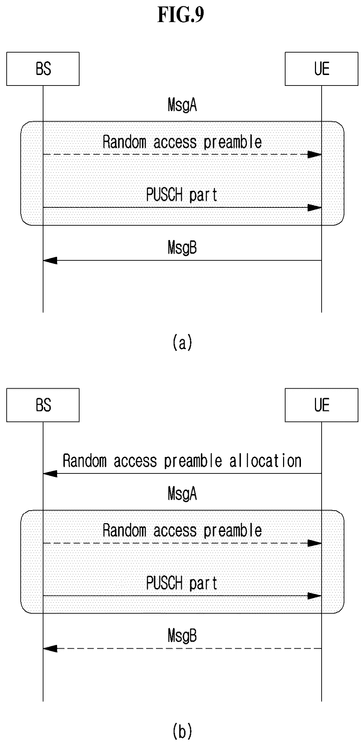

FIG. 9 illustrates a two-step random access process in a wireless communication system to which the present disclosure may be applied.

As shown in FIG. 9(a), a 2-step random access process may include two steps of transmitting an uplink signal (referred to as message A and corresponds to PRACH preamble + Msg3 PUSCH) from a UE to a base station and transmitting a downlink signal (referred to as message B and corresponding to RAR + Msg4 PDSCH) from a base station to a UE.

Also, in a non-contention random access process, as shown in FIG. 9(b), a random access preamble and a PUSCH part may be transmitted together.

Although not shown in FIG. 9, a PDCCH for scheduling message B may be transmitted from a base station to a UE, which may be referred to as Msg. B PDCCH.

Overall Reduced capability (RedCap)

Terms that may be used in this disclosure are defined as follows.

- BWP: BandWidth Part (may be composed of continuous resource blocks (RBs) on a frequency axis. It may correspond to one numerology (e.g., SCS, CP length, slot/mini-slot duration, etc.). In addition, multiple BWPs may be configured in one carrier (the number of BWPs per carrier may also be limited), but the number of activated BWPs may be limited to a part (e.g., one) per carrier.
- SS: search space

EP 4 753 192 A2

- CORESET: control resource set (Control REsource SET) (means a time-frequency resource region in which a PDCCH can be transmitted, and the number of CORESETs per BWP may be limited.)
- Type0-PDCCH CSS (common search space) set: A search space set in which an NR UE monitors a set of PDCCH candidates for a DCI format with a CRC scrambled by an SI-RNTI
- CORESET#0: CORESET for Type0-PDCCH CSS set for an NR UE (configured in MIB)
- MO: PDCCH monitoring occasion (e.g., for Type0-PDCCH CSS set)
- SIB1-R: This is (additional) SIB1 for a RedCap UE, and may be limited to a case where it is generated as a TB separate from an SIB1 and transmitted through a separate PDSCH.
- CORESET#0-R: CORESET#0 for a RedCap UE
- Type0-PDCCH-R CSS set: A search space set in which a RedCap UE monitors a set of PDCCH candidates for a DCI format with a CRC scrambled by an SI-RNTI
- MO-R: PDCCH monitoring occasion (e.g., for Type0-PDCCH-R CSS set)
- Cell defining SSB (CD-SSB): RMSI scheduling information among an NR SSB
- Non-cell defining SSB (non-CD-SSB): An SSB that is placed in the NR sync raster, but does not include RMSI scheduling information of a cell for measurement. However, information indicating a location of a CD-SSB may be included.
- SCS: subcarrier spacing
- SI-RNTI: A system Information Radio-Network Temporary Identifier
- Camp on: "Camp on" is a UE state in which a UE is ready to stay in a cell and start a potential dedicated service or receive an ongoing broadcast service
- TB: Transport Block
- RSA (Redcap standalone): A cell that supports only Redcap devices or services
- IE: Information Element
- RO: RACH Occasion
- QCL: Quasi-Co-Location (The QCL relationship between two reference signals (RS) may mean that a QCL parameter such as Doppler shift, Doppler spread, average delay, delay spread, spatial Rx parameter, etc. obtained from one RS can also be applied to another RS (or antenna port(s) of the corresponding RS). In the NR system, 4 QCL types are defined as follows. 'TypeA': {Doppler shift, Doppler spread, average delay, delay spread}, 'TypeB': {Doppler shift, Doppler spread}, 'TypeC': {Doppler shift, average delay}, 'TypeD': {Spatial Rx parameter}. For certain DL RS antenna port(s), a first DL RS may be configured as a reference for QCL type X (X = A, B, C, or D), and a second DL RS may be configured as a reference for QCL type Y (Y=A, B, C, or D, but X≠Y)).
- TCI: Transmission Configuration Indication (One TCI state includes a QCL relationship between DM-RS ports of a PDSCH, DM-RS ports of a PDCCH, or CSI-RS port(s) of CSI-RS resources and one or more DL RSs. For 'Transmission Configuration Indication' among fields in DCI that schedules a PDSCH, a TCI state index corresponding to each code point constituting the corresponding field is activated by a MAC control element (CE). TCI state configuration for each TCI state index is configured through RRC signaling. In the Rel-16 NR system, a corresponding TCI state is configured between DL RSs, but configuration between a DL RS and a UL RS or between a UL RS and a PUSCH DM-RS, a PUCCH DM-RS, UL RS may be allowed in a future release. Examples of a UL RS include an SRS, a PUSCH DM-RS, a PUCCH DM-RS, etc.)
- TRP: Transmission and Reception Point
- RACH: Random Access Channel
- RAR: Random Access Response
- Msg3: This is a message transmitted through an uplink shared channel (UL-SCH) including a C-RNTI MAC CE or common control channel (CCH) service data unit (SDU), provided from a higher layer, and associated with a UE Contention Resolution Identity as part of a random access procedure.
- Special Cell: In case of dual connectivity operation, the term Special Cell indicates a PCell of MCG or a PSCell of SCG depending on whether a MAC entity is associated with a master cell group (MCG) or secondary cell group (SCG), respectively. Otherwise, the term Special Cell refers to PCell. Special Cell supports PUCCH transmission and contention-based random access and is always active.
- Serving Cell: includes PCell, PSCell, and secondary cell (SCell).

Recently, in addition to major 5G use cases (mMTC, eMBB, and URLLC), importance/interest in use case areas spanning mMTC and eMBB or mMTC and URLLC is increasing. Accordingly, need for a UE to efficiently support these use cases in terms of device cost, power consumption, form factor, etc. is increasing. In the present disclosure, a UE for this purpose is referred to as a NR reduced capability (redcap) UE/device, or (NR) redcap UE/device for short. In addition, a normal NR terminal that supports all or one or more of 5G main use cases, as distinguished from a redcap device, is referred to as NR (normal) UE/device. An NR UE may be a terminal equipped with all of the 5G key capabilities (peak data rate, user experienced data rate, latency, mobility, connection density, energy efficiency, spectrum efficiency, area traffic efficiency, etc.) defined in IMT-2020, and a redcap UE may be a UE in which some capabilities are intentionally reduced in order to achieve device cost, power consumption, and small form factor.

A 5G use case area spanning mMTC and eMBB, or mMTC and URLLC, which are target use cases of a Redcap device, is referred to as redcap use cases for convenience in this disclosure. Redcap use cases can be, for example:

i) Connected industries

- Sensors and actuators are connected to 5G networks and core.
- Includes large-scale industrial wireless sensor network (IWSN) use cases and requirements
- Relatively low-end services requiring small device form factors with several years of battery life as well as URLLC services with very high requirements.
- The requirements for these services are higher than low power wireless area (LPWA) (i.e., LTE-M/NB-IOT) but lower than URLCC and eMBB.
- Devices in this environment include, for example, pressure sensors, humidity sensors, thermometers, motion sensors, accelerometers, actuators, etc.

ii) Smart city

- Smart city vertical includes data collection and processing to more efficiently monitor and control city resources and provide services to city residents.
- In particular, a deployment of surveillance cameras is not only an essential part of a smart city, but also an essential part in factories and industries.

iii) Wearables

- Wearable use cases include smart watches, rings, eHealth-related devices, and medical monitoring devices.
- One feature of the use case is a small size of a device.

Redcap use cases may be not support in terms of bit rate, latency, etc. by low power wireless area (LPWA) UEs (e.g., LTE-M, NB-IoT, etc.). NR UEs may be supported functionally, but may be inefficient in terms of terminal manufacturing cost, form factor, and battery life. Supporting the above use case area in the 5G network as a redcap UE having characteristics such as low cost, low power, and small form factor can reduce manufacturing and maintenance costs of the UE.

Redcap use cases have quite diverse requirements in terms of UE complexity, target bit rate, latency, power consumption, etc., in the present disclosure, requirements that a redcap UE should satisfy are referred to as redcap requirements. Redcap requirements can be divided into generic requirements commonly applied to all redcap use cases and use case specific requirements applied only to some use case(s).

Redcap requirements may be satisfied by (a combination of) various features provided by a UE and a base station. The following is an example of features and sub-features supported by a UE/base station to satisfy redcap requirements.

i) Complexity Reducing Features

- Reducing the number of UE RX/TX antennas
- UE bandwidth reduction
- half-duplex FDD
- Relaxed UE processing time
- Relaxed UE processing functions

ii) Power saving
- Reduce PDCCH monitoring with a small number of blind decoding (BD) and control resource element (CCE) restrictions

- extended discontinuous reception (DRX) for RRC Deactivation/Inactive and/or Idle
- radio resource management (RRM) for stationary devices

iii) Coverage recovery/enhancement

The above redcap use cases may define and support one or a plurality of UEs, and the present disclosure considers both of the following cases.

Case A) Redcap use cases are supported in the form of a single UE (in the case of a single device type)
Case B) Redcap use cases are supported in the form of multiple UEs (in case of multiple device types)

In Case A), a redcap UE may be a UE that satisfies all of the above redcap requirements, that is, both generic and use case specific requirements, and may also be a UE that supports all redcap use cases. In this case, since various requirements must be satisfied at the same time, there may be a factor of cost increase due to increase in UE complexity, but at the same time, cost reduction effect by mass production according to use case expansion can be expected. Case B) may be a case in which a UE type is defined and supported for each redcap use case in consideration of the fact that the redcap use case requirements are quite diverse. Even in this case, all of the generic requirements may be commonly satisfied. Here, each device type defined for each use case is referred to as a redcap device type. Case B) includes the case of grouping several similar use cases in terms of requirements and supporting them in the form of a single UE. Each of these redcap device types may support some predefined or specific combination of redcap UE features. If multiple redcap device types are defined and redcap use cases are supported, there is an advantage in that specific redcap use cases can be supported through a more optimized redcap UE in terms of cost and power consumption. For example, the IWS use case can be supported through a very small, inexpensive, and power-efficient UE.

In the present disclosure, reduced capability may include meaning of reduced/low complexity/cost, reduced bandwidth, etc.

In case of Case B), that is, in a case of supporting redcap use cases in a plurality of device types, the following method may be considered to classify redcap device types. The following methods can also be applied to Case A), that is, to distinguish a redcap device from an NR UE.

In order to support an operation of a redcap UE distinguished from an NR UE, a redcap UE may need to report its own device type information to a base station.

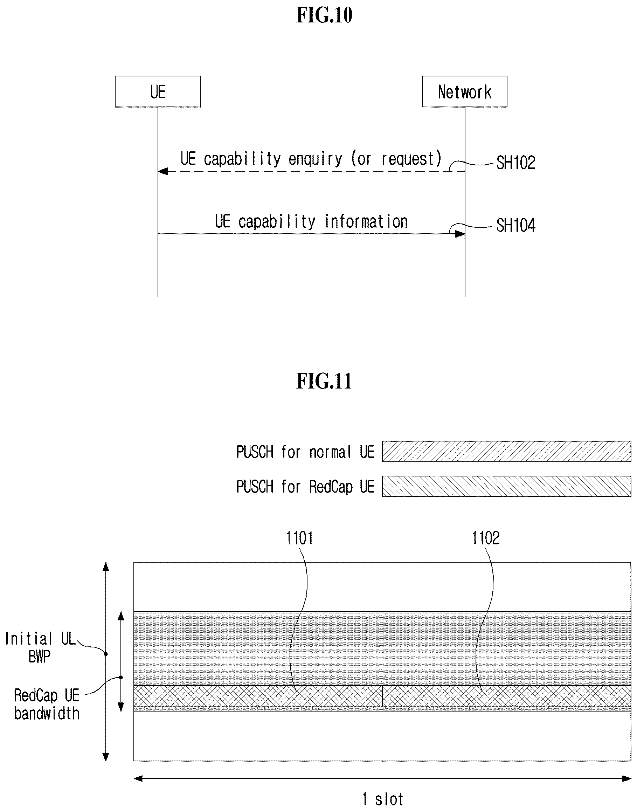

FIG. 10 illustrates a procedure for reporting a device type of a redcap device in a wireless communication system to which the present disclosure may be applied.

In FIG. 10, a reporting procedure may (re)use the UE capability transfer procedure defined in TS 38.331 as follows, a base station may acquire redcap device type information through reception of UE capability information and use the acquired device information when scheduling a corresponding UE.

Referring to FIG. 10, the base station/network performs a capability inquiry/request to a UE in the RRC_CONNECTED state (SH102). The UE includes redcap device type information in UE capability information and transmits it to the base station/network (SH104).

- Classification method 1

Redcap device types can be classified based on one of the main requirements. Main requirements that can be criteria for classification may be, for example, supported max data rate (peak bit rate), latency, mobility (stationary/fixed, portable, mobile, etc.), battery lifetime, complexity, coverage, etc. For each classified redcap device type, UE feature(s) (combination) that must be supported mandatorily or can be optionally supported can be defined in the specification. This may be to reduce overhead of separately signaling whether or not features are supported for each device type.

Redcap device type information included in UE capability information and reported by a UE to a base station/network may be, for example, transmitted to a base station through a specific field (e.g., RedCapDeviceType) of a UE-NR-Capability information element (IE). For example, when classified as redcap device type 1, 2, ..., a value of the RedCapDeviceType field may be expressed as integers such as 1, 2, ..., or a combination of characters and integers such as r1, r2, .... In this way, a UE reports the device type and parameters related thereto by including one field in the capability information, therefore this method has advantages in terms of signaling overhead.

Example) Method of classifying redcap device types based on supported max data rate and reporting to a base station

The supported max data rate of the NR terminal is determined by the equation shown in Table 8 below in TS 38.306. Table 8 illustrates the TS 38.306 standard.

【Table 8】

# 4.1 Supported max data rate

## 4.1.1 General

The DL and UL max data rate supported by the UE is calculated by band or band combinations supported by the UE. A UE supporting NR (NR SA, MR-DC) shall support the calculated DL and UL max data rate defined in 4.1.2.

## 4.1.2 Supported max data rate

For NR, the approximate data rate for a given number of aggregated carriers in a band or band combination is computed as follows.

$$\text{data rate (in Mbps)} = 10^{-6} \cdot \sum_{j=1}^{J} \left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot \left(1 - OH^{(j)}\right) \right)$$

wherein

J is the number of aggregated component carriers in a band or band combination

$R_{max} = 948/1024$

For the j-th CC,

$v_{Layers}^{(j)}$ is the maximum number of supported layers given by higher layer parameter *maxNumberMIMO-LayersPDSCH* for downlink and maximum of higher layer parameters *maxNumberMIMO-LayersCB-PUSCH* and *maxNumberMIMO-LayersNonCB-PUSCH* for uplink.

$Q_m^{(j)}$ is the maximum supported modulation order given by higher layer parameter *supportedModulationOrderDL* for downlink and higher layer parameter *supportedModulationOrderUL* for uplink.

$f^{(j)}$ is the scaling factor given by higher layer parameter *scalingFactor* and can take the values 1, 0.8, 0.75, and 0.4.

$\mu$ is the numerology (as defined in TS 38.211 [6])

$T_s^{\mu}$ is the average OFDM symbol duration in a subframe for numerology $\mu$, i.e.

$$T_s^{\mu} = \frac{10^{-3}}{14 \cdot 2^{\mu}}$$. Note that normal cyclic prefix is assumed.

$N_{PRB}^{BW(j),\mu}$ is the maximum RB allocation in bandwidth $BW^{(j)}$ with numerology $\mu$, as defined in 5.3 TS 38.101-1 [2] and 5.3 TS 38.101-2 [3], where $BW^{(j)}$ is the UE supported maximum bandwidth in the given band or band combination.

$OH^{(j)}$ is the overhead and takes the following values

0.14, for frequency range FR1 for DL
0.18, for frequency range FR2 for DL
0.08, for frequency range FR1 for UL
0.10, for frequency range FR2 for UL

NOTE:    Only one of the UL or SUL carriers (the one with the higher data rate) is counted for a cell operating SUL.

The approximate maximum data rate can be computed as the maximum of the approximate data rates computed using the above formula for each of the supported band or band combinations.

For single carrier NR SA operation, the UE shall support a data rate for the carrier that is no smaller than the data rate computed using the above formula, with $J = 1\ CC$ and component $v_{Layers}^{(j)} \cdot Q_m^{(j)} \cdot f^{(j)}$ is no smaller than 4.

NOTE: As an example, the value 4 in the component above can correspond to $v_{Layers}^{(j)} = 1$, $Q_m^{(j)} = 4$ and $f^{(j)} = 1$.

For EUTRA in case of MR-DC, the approximate data rate for a given number of aggregated carriers in a band or band combination is computed as follows.

$$\text{Data rate (in Mbps)} = 10^{-3} \cdot \sum_{j=1}^{J} TBS_j$$

wherein

J is the number of aggregated EUTRA component carriers in MR-DC band combination

$TBS_j$ is the total maximum number of DL-SCH transport block bits received or the total maximum number of UL-SCH transport block bits transmitted, within a 1ms TTI for j-th CC, as derived from TS36.213 [19] based on the UE supported maximum MIMO layers for the j-th CC, and based on the maximum modulation order for the j-th CC and number of PRBs based on the bandwidth of the j-th CC according to indicated UE capabilities.

The approximate maximum data rate can be computed as the maximum of the approximate data rates computed using the above formula for each of the supported band or band combinations.

For MR-DC, the approximate maximum data rate is computed as the sum of the approximate maximum data rates from NR and EUTRA.

Here, a UE reports parameters necessary for an equation for calculating a supported max data rate to be supported by an NR UE in the RRC_CONNECTED state according to a request of a base station.

The following illustrates these parameters and RRC IEs including the corresponding parameters.

- FeatureSetDownlink IE: scalingFactor
- FeatureSetDownlinkPerCC IE: maxNumberMIMO-LayersPDSCH, supportedModulationOrderDL, supportedBand-widthDL, supportedSubCarrierSpacingDL
- FeatureSetUplink IE: scalingFactor
- FeatureSetUplinkPerCC  IE:  maxNumberMIMO-LayersCB-PUSCH,  maxNumberMIMO-LayersNonCB-PUSCH, supportedModulationOrderUL, supportedBandwidthUL, supportedSubCarrierSpacingUL

In the case of a Redcap UE, in the case of a method of classifying a redcap device type based on a supported max data rate, values of the above parameters for each device type are defined in advance in the standard, and a UE sets a value of the RedCapDeviceType field of the UE-NR-Capability IE to a specific value to indicate a base station with the above parameter information along with the redcap device type information. Compared to the conventional operation in which an NR UE transmits the above parameters to a base station by including the above parameters in UE capability information, signaling overhead reduction can be expected by a redcap UE reporting the device type and the parameters related thereto through one field. A base station can obtain the device type, a supported max data rate, and values of the parameters listed above through the value of the RedCapDeviceType field and use them for UE scheduling.

- Classification method 2

Alternatively, rather than classifying the redcap device type based on the main requirement, the redcap device type may be classified based on UE feature(s) (combination) that must be supported mandatorily or can be optionally supported. This may be a more appropriate method when the features that need to be supported or can be supported for each use case are clear. The UE feature (s) (combination of) predefined in the standard for each Redcap device type is referred to as a feature set, among them, a feature set that must be mandatorily supported for each device type will be referred to as a mandatory feature set of the corresponding device type or defining the device type. In this method, a definition of a redcap device type may not be specified in the standard, which may mean that the above redcap use cases are supported as separate terminal types supporting different feature sets.

In the case of the above method, a redcap UE may report the redcap device type or use case(s) supported by the UE to a base station by reporting a predefined feature set to the base station. This may be a method more suitable for supporting various use cases through various optional features without distinguishing a separate UE category. The above feature set may be substituted with a combination of capability parameters, that is, a capability parameter set. The above feature set may be a mandatory feature set defined in the standard in advance for each redcap device type. For the above operation, a set of candidate features for a redcap device (type), that is, a feature pool may be previously defined or set in the standard. A redcap device may report a mandatory feature set defined for each type to a base station based on its own type. A UE may additionally report an optional feature set to a base station in addition to the mandatory feature set. A UE can perform an additional operation or a more optimized operation for a specific use case by additionally selecting and reporting an optional feature set. For example, in the case of a device type for a surveillance camera use case, in the case where a wired power supply UE and a power supply UE through a battery coexist, the mandatory feature set does not include a power saving feature and may be designated as an optional feature. Therefore, it can be selectively supported according to the detailed form of a terminal and reported to a base station in case of support. A base station can determine whether a feature is supported through the presence or absence of the corresponding parameter in the feature set reported by a redcap UE, and can reflect it when scheduling the corresponding UE.

- Classification method 3

Alternatively, the Redcap device type may be classified based on a combination of capability parameter(s). A combination of capability parameters that classify redcap device types may be parameters that determine the above redcap requirements. For example, the capability parameter for determining the redcap device type may be a bandwidth, a modulation order, the number of MIMO layers, etc. supported by a UE that determine the supported max data rate requirement supported by the UE. The values of the above parameters may be a list of actually supportable values or may be the maximum value among supported values.

Example) capability parameter(s) that determines the Redcap device type
Supported Bandwidth ($N_{RB}$): (max) UE channel bandwidth or (max) UE transmission bandwidth; RB units
Supported modulation order ($Q_m$): $Q_m$=2 for QPSK; 4 for 16 QAM; 6 for 64 QAM; etc.

- Number of supported MIMO layers ($N_L$): can be substituted with the number of antennas ($N_a$)

A combination of capability parameters that determine a Redcap device type will be referred to as a capability parameter set of the corresponding device type. Redcap device type may be defined by classifying capability parameter set value(s) in ascending order (or descending order) of supported max data rate, for example. The example below is an example of defining M device types in ascending order of the supported max data rate.

Redcap device type classification according to capability parameter set value(s) (example):

- Device Type 1: $\{N_L, N_{RB}, Q_m\}$=$\{1, 25, 2\}$
- Device Type 2: $\{N_L, N_{RB}, Q_m\}$=$\{1, 25, 4\}$, or $\{1, 52, 2\}$
- Device Type 3: $\{N_L, N_{RB}, Q_m\}$=$\{1, 52, 4\}$, or $\{1, 106, 2\}$
- Device Type 4: $\{N_L, N_{RB}, Q_m\}$=$\{1, 106, 4\}$, or $\{2, 106, 2\}$
- Device Type 5: $\{N_L, N_{RB}, Q_m\}$=$\{1, 106, 6\}$
- Device Type 6: $\{N_L, N_{RB}, Q_m\}$=$\{2, 106, 4\}$
- Device Type 7: $\{N_L, N_{RB}, Q_m\}$=$\{2, 106, 6\}$
  ...
- Device Type M: $\{N_L, N_{RB}, Q_m\}$=$\{X, Y, Z\}$

For example, $N_{RB}$ value may use one of the values (maximum number of RBs that can be configured for each UE channel bandwidth) defined in Table 9 below in the case of NR FR1 (Frequency Range 1, i.e., a band of 6 GHz or less). The above example is a value according to subcarrier spacing (SCS) = 15 kHz criterion, if a redcap device supports SCS = 30 kHz and a cell to be connected uses SCS = 30 kHz for data transmission, the $N_{RB}$ value based on SCS = 15 kHz in the above example may be substituted with a value corresponding to SCS = 30 kHz with reference to Table 9 below.

Table 9 illustrates a maximum transmission bandwidth configuration ($N_{RB}$) for each SCS in NR FR1.

[Table 9]

| SCS (kHz) | 5 MHz | 10 MHz | 15 MHz | 20 MHz |
| | $N_{RB}$ | $N_{RB}$ | $N_{RB}$ | $N_{RB}$ |
|---|---|---|---|---|
| 15 | 25 | 52 | 79 | 106 |
| 30 | 11 | 24 | 38 | 51 |

In the case of device type 2/3/4 in the device type classification example, it corresponds to a case where one device type is defined with a plurality of capability set values. When device types are classified based on the supported max data rate as above, multiple capability parameter set values defining one device type may mean combinations supporting the same or similar supported max data rate.

Device type(s) that can be supported for each use case can be defined as follows using the device type(s) defined in the above example, and based on the supportable device type(s), a base station may limit cell access or perform subscription-based barring.

Example) Supportable device type(s) for each use case:

- Industrial Wireless Sensor (IWS): device types 1 and 2
- Video Surveillance: Device Types 2, 3
- Wearables: device types 4, 5, 6, 7

Meanwhile, in order to avoid an increase in cost due to market segmentation due to excessive segmentation of device types, the number M of device types may be limited. As an extreme example, if M=1 is restricted, a redcap UE is not divided into multiple device types, that is, a single device type can support all of the above target use cases. As another example, if M=3 is restricted, device types that can be supported by device type classification and use case can be defined as follows.

Example) Classification of device type according to capability set value(s) (Example: In case of M=3):

- Device Type 1: $\{N_L, N_{RB}, Q_m\}$ = {1, 25, 2} (or {1, 25, 4} or {1, 52, 2})
- Device Type 2: $\{N_L, N_{RB}, Q_m\}$ = {1, 52, 4} or {1, 106, 2}
- Device Type 3: $\{N_L, N_{RB}, Q_m\}$ = {2, 106, 6}

Example) Supportable device type(s) for each use case (Example: M=3 case)

- IWS: Device types 1
- Video Surveillance: Device types 3
- Wearables: Device types 7

Redcap UE's bandwidth capability, that is, a UE max bandwidth, may be determined as a minimum bandwidth that satisfies a bit rate required by the target use case. UE max bandwidth reduction can be expected to reduce a cost of a radio frequency (RF) device and/or baseband processing, and also reduce power consumption. Here, considering that a device manufacturing cost is determined by a peak rate or supported max data rate rather than a average bit rate or reference bit rate, a required bit rate may mean a peak rate or a supported max data rate. When determining a max bandwidth supporting a required bit rate, specific values may be assumed for other parameters (eg, the number of antennas ($N_L$), modulation order ($Q_m$), etc.) that determine a required bit rate. For example, in the case of Device Type 3 in the above example, a peak rate of about ~28 MHz can be supported, and here, a required max bandwidth is 20 MHz (106 RBs) assuming $\{N_L=1, Q_m=2\}$, and 10 MHz (52 RBs) assuming $\{N_L=1, Q_m=2\}$. Or, in the case of $\{N_L=2, Q_m=4\}$, it may be 5 MHz (25 RBs).

- Device Type 3: $\{N_L, N_{RB}, Q_m\}$ = {1, 52, 4}, or {1, 106, 2}

Within a max UE bandwidth of a Redcap UE, transmission/reception can be performed with transmission bandwidth allocated by network configuration using RRC signaling, etc.

A UE min bandwidth may be defined as a minimum value among NR UE channel bandwidths (or transmission bandwidths) greater than or greater than or equal to an NR SSB bandwidth.

Example) In FR1, 5 MHz for NR SSB with UE min bandwidth = SCS = 15 kHz; 10 MHz for NR SSB with SCS = 30kHz

Example) In FR2, 40 MHz for NR SSB with UE min bandwidth = SCS = 120 kHz; 80 MHz for NR SSB with SCS = 240kHz

This may be to support access to an NR cell through an NR SSB while implementing low power consumption by supporting a service with a small required bit rate with a minimum bandwidth.

- Classification method 4

Considering that bandwidth capability of a Redcap UE is determined by a required bit rate of each use case, a Redcap device type may be classified based on UE bandwidth capability. Bandwidth capability that determines a Redcap device type may indicate, for example, supported bandwidth (NRB), that is, (max) UE channel bandwidth or (max) UE transmission bandwidth in RB units. Alternatively, it may be a minimum UE channel bandwidth or a minimum UE transmission bandwidth. More specifically, the following classifications are possible.

Classification method 4-1) It is classified by Max bandwidth, and an actual data transmission/reception bandwidth (<=max bandwidth) is configured and used

Classification method 4-2) It is classified by Min bandwidth, and an actual data transmission/reception bandwidth (>=min bandwidth) is configured and used.

Classification method 4-3) One or multiple supportable bandwidths (sets) are defined for each device type, and an actual data transmission/reception bandwidth is configured and used within a corresponding bandwidth (set)

For the classification method 4-1/2/3, a max bandwidth can be limited to a value smaller than an NR bandwidth (e.g., 20 MHz), and a min bandwidth may be greater than or equal to an SSB bandwidth (e.g., in the case of 15 kHz SSB, 5 MHz).

Initial access and PUCCH transmission method of a specific type of UE (e.g., RedCap UE)

Hereinafter, the present disclosure proposes a method for initial access and PUCCH transmission of a Redcap UE. The above-described method and sub-contents of classifying a type of a RedCap device and reporting to a base station, and the method and sub-contents of supporting initial access and UL frequency hopping of a Redcap UE can be referred to as the background of the main proposal of the present disclosure.

Hereinafter, in the description of the present disclosure, a normal terminal means a terminal supporting all capabilities required by a wireless communication system (e.g., an NR system), a specific type of terminal means a terminal supporting specific requirements and/or specific feature(s) and/or specific use case among all capabilities required by the wireless communication system, for example, a redcap UE. In addition, in the following description of the present disclosure, it may be referred to as a redcap UE for convenience of explanation, but this is only one example, and the present disclosure is not limited thereto, and a redcap UE may be interpreted as a specific type of terminal.

In an NR cell supporting a Redcap UE, that is, in a cell in which a normal UE and a redcap UE coexist or can coexist, for resource efficiency, it may be preferred to share as many resources as possible between normal UEs and redcap UEs. This is because, if available/schedulable resources for a normal UE and available/schedulable resources for a redcap UE are completely separated from each other, there may be problems such as reduced resource utilization and limited scheduling flexibility from the point of view of a base station. However, in the following case, sharing of resources between a normal UE and a redcap UE in a random access process for cell access may not be effectively supported by the conventional method.

1. Due to the difference in coverage performance between a NR UE and a redcap UE in the Msg2 (i.e., RAR), msg4, or msgB steps, (additional) repetition for a redcap UE may be required. In this case, repetition in a RACH process (i.e., radom access procedure) of a redcap UE may be equally applied to at least one or more of, for example, Msg 1 to 4 / Msg A to B, or may be applied individually as an independent configuration to each message.
2. When an initial UL BWP cannot be configured within a maximum UE bandwidth of a redcap UE in consideration of impact on a legacy NR UE
3. When impact on an NR UE is inevitable during a random access process due to UE processing time relaxation of a Redcap UE
4. In the case of configuring and operating a separate initial UL BWP for a redcap UE for reasons 1, 2, and 3 above

The present disclosure relates to a method for supporting initial access and PUCCH transmission of a redcap UE in an NR cell in which a normal UE and a redcap UE coexist. However, the present disclosure is not limited to the above-described scenario and is not applied, and may be equally applied to initial access and PUCCH transmission of NR UEs.

Embodiment 1: Random Access Response (RAR) Receiving Method of RedCap UE

A RedCap UE may support a limited UE bandwidth in consideration of UE complexity. If a RACH occasion (RO) (or PRACH occasion) is configured in a conventional method for an NR UE, it may happen that an (initial) UL bandwidth of such a RedCap UE may not cover all the frequency regions of the configured RO. In this case, a redcap UE may need to receive an RAR after performing a frequency retuning operation after transmitting an RA preamble (i.e., PRACH preamble) in a random access (RA) process for initial access. In addition, in the case of a UE operating in half-duplex FDD (in the initial access process) in a FDD band, an RAR may need to be received after frequency retuning.

In this case, during UL-to-DL switching (accompanied by frequency retuning) or Tx-to-Rx switching, DL reception including PDCCH monitoring may not be possible. Therefore, in consideration of this, an RAR window of a redcap UE may be configured/defined to start as much as X symbols or X' us later than an RAR window of a normal UE. Here, X or X' may be a value greater than or equal to a transition time ($N_{Rx-Tx}$ or $N_{Tx-Rx}$) and/or a frequency retuning time defined in the TS 38.211 standard. Alternatively, it may be newly defined in the standard in consideration of the characteristics of a redcap UE, or may be configured by higher layer signaling through system information, etc. by a base station.

A conventional RAR window for an NR UE is defined in the TS 38.213 specification (Table 10) and the TS 38.321 specification (Table 11) as follows.

[Table 10]

---

**TS 38.213**

**8.2 Random access response - Type-1 random access procedure**

In response to a PRACH transmission, a UE attempts to detect a DCI format 1_0 with CRC scrambled by a corresponding RA-RNTI during a window controlled by higher layers [11, TS 38.321]. The window starts at the first symbol of the earliest CORESET the UE is configured to receive PDCCH for Type1-PDCCH CSS set, as defined in Clause 10.1, that is at least one symbol, after the last symbol of the PRACH occasion corresponding to the PRACH transmission, where the symbol duration corresponds to the SCS for Type1-PDCCH CSS set as defined in Clause 10.1. The length of the window in number of slots, based on the SCS for Type1-PDCCH CSS set, is provided by *ra-ResponseWindow.*

...

---

Referring to Table 10, an RAR window starts with the first symbol of the earliest CORESET configured for a UE to receive a PDCCH for a type1-PDCCH common search space (CSS) set after the last symbol of a PRACH occasion (i.e., RO) corresponding to PRACH transmission.

[Table 11]

---

**TS 38.321**

**5.1.4 Random Access Response reception**

Once the Random Access Preamble is transmitted and regardless of the possible occurrence of a measurement gap, the MAC entity shall:

> 1> if the contention-free Random Access Preamble for beam failure recovery request was transmitted by the MAC entity:

>> 2> start the *ra-ResponseWindow* configured in *BeamFailureRecoveryConfig* at the first PDCCH occasion as specified in TS 38.213 [6] from the end of the Random Access Preamble transmission;

>> 2> monitor for a PDCCH transmission on the search space indicated by *recoverySearchSpaceId* of the SpCell identified by the C-RNTI while *ra-ResponseWindow* is running.

> 1> else:

>> 2> start the *ra-ResponseWindow* configured in *RACH-ConfigCommon* at the first PDCCH occasion as specified in TS 38.213 [6] from the end of the Random Access Preamble transmission;

>> 2> monitor the PDCCH of the SpCell for Random Access Response(s) identified by the RA-RNTI while the *ra-ResponseWindow* is running.

...

---

Referring to Table 11, when a random access preamble is transmitted, a MAC entity may start ra-ResponseWindow (i.e., a length of an RAR window) configured in RACH-ConfigCommon on the first PDCCH occasion from an end of random access preamble transmission.

In order to define an RAR window of a redcap UE in the same way as above, a redcap UE may monitor DCI format 1_0 with a CRC scrambled by an RA-RNTI from the first symbol of the earliest CORESET starting after at least X symbol or X' us from the last symbol of RO used for RA preamble transmission after RA preamble transmission. Alternatively, a PDCCH monitoring period for RAR reception, that is, a starting point of an RAR window or a starting point of an RAR window counter, can be defined as the first symbol of the earliest CORESET starting after at least X symbol or X' us from the last symbol of RO used for RA preamble transmission. A value of X or X' is as described above. Alternatively, a X value in symbol units may be a value larger than the minimum number of symbol durations, which is greater than a transition time and/or a frequency retuning time, by 1.

In order to configure an RAR window of a redcap UE (in addition to an RAR window for a normal UE), a separate RAR window for a redcap UE may be used. A size of an RAR window may be determined by a configuration value of an RAR window counter. Here, a size of a separate RAR window for a redcap UE may have the same size as an existing RAR window (without configuring a separate size) or may be configured separately. In the case of having the same size, an RAR window of a redcap UE may have a predetermined time difference (staggered) form of a conventional RAR window.

Alternatively, a base station may configure a redcap UE to use or share the same RAR window as a normal UE without defining a separate RAR window. In this case, this may mean that an RAR window is guaranteed by a base station implementation so that a base station satisfies aforementioned transition time and/or frequency retuning time conditions.

Embodiment 2: Msg3 PUSCH transmission method of RedCap UE

In an RA procedure for initial access of an NR UE, Msg3 PUSCH transmission is scheduled by an RAR UL grant. A field configuration of an RAR UL grant and corresponding Msg3 PUSCH frequency domain resource allocation (FDRA) and frequency hopping (FH) information are specified in TS 38.213 as shown in Table 12 below.

【Table 12】

TS 38.213

## 8.2 Random access response - Type-1 random access procedure

...

A RAR UL grant schedules a PUSCH transmission from the UE. The contents of the RAR UL grant, starting with the MSB and ending with the LSB, are given in Table 8.2-1.

If the value of the frequency hopping flag is 0, the UE transmits the PUSCH without frequency hopping; otherwise, the UE transmits the PUSCH with frequency hopping.

The UE determines the MCS of the PUSCH transmission from the first sixteen indexes of the applicable MCS index table for PUSCH as described in [6, TS 38.214].

The TPC command value $\delta_{msg2,b,f,c}$ is used for setting the power of the PUSCH transmission, as described in Clause 7.1.1, and is interpreted according to Table 8.2-2.

The CSI request field is reserved.

The ChannelAccess-CPext field indicates a channel access type and CP extension for operation with shared spectrum channel access [15, TS 37.213].

**Table 8.2-1: Random Access Response Grant Content field size**

| RAR grant field | Number of bits |
|---|---|
| Frequency hopping flag | 1 |
| PUSCH frequency resource allocation | 14, for operation without shared spectrum channel access<br>12, for operation with shared spectrum channel access |
| PUSCH time resource allocation | 4 |
| MCS | 4 |
| TPC command for PUSCH | 3 |
| CSI request | 1 |
| ChannelAccess-CPext | 0, for operation without shared spectrum channel access<br>2, for operation with shared spectrum channel access |

**Table 8.2-2: TPC Command $\delta_{msg2,b,f,c}$ for PUSCH**

| TPC Command | Value (in dB) |
|---|---|
| 0 | -6 |
| 1 | -4 |
| 2 | -2 |
| 3 | 0 |
| 4 | 2 |
| 5 | 4 |
| 6 | 6 |
| 7 | 8 |

## 8.3 PUSCH scheduled by RAR UL grant

An active UL BWP, as described in Clause 12 and in [4, TS 38.211], for a PUSCH transmission scheduled by a RAR UL grant is indicated by higher layers.

If *useInterlace-PUCCH-PUSCH* is not provided by *BWP-UplinkCommon* and *BWP-UplinkDedicated*, for determining the frequency domain resource allocation for the PUSCH transmission within the active UL BWP

- if the active UL BWP and the initial UL BWP have same SCS and same CP length and the active UL BWP includes all RBs of the initial UL BWP, or the active UL BWP is the initial UL BWP, the initial UL BWP is used

- else, the RB numbering starts from the first RB of the active UL BWP and the maximum number of RBs for frequency domain resource allocation equals the number of RBs in the initial UL BWP

The frequency domain resource allocation is by uplink resource allocation type 1 [6, TS 38.214]. For an initial UL BWP size of $N_{BWP}^{size}$ RBs, a UE processes the frequency domain resource assignment field as follows

- if $N_{BWP}^{size} \leq 180$, or for operation with shared spectrum channel access if $N_{BWP}^{size} \leq 90$

  - truncate the frequency domain resource assignment field to its $\left\lceil \log_2\left(N_{BWP}^{size} \cdot \left(N_{BWP}^{size} + 1\right)/2\right)\right\rceil$ least significant bits and interpret the truncated frequency resource assignment field as for the frequency resource assignment field in DCI format 0_0 as described in [5, TS 38.212]

- else

  - insert $\left\lceil \log_2\left(N_{BWP}^{size} \cdot \left(N_{BWP}^{size} + 1\right)/2\right)\right\rceil - 14$ most significant bits, or for operation with shared spectrum channel access insert $\left\lceil \log_2\left(N_{BWP}^{size} \cdot \left(N_{BWP}^{size} + 1\right)/2\right)\right\rceil - 12$ most significant bits, with value set to '0' after the $N_{UL,hop}$ bits to the frequency domain resource assignment field, where $N_{UL,hop} = 0$ if the frequency hopping flag is set to '0' and $N_{UL,hop}$ is provided in Table 8.3-1 if the hopping flag bit is set to '1', and interpret the expanded frequency resource assignment field as for the frequency resource assignment field in DCI format 0_0 as described in [5, TS 38.212]

- end if

...

For a PUSCH transmission with frequency hopping scheduled by RAR UL grant or for a Msg3 PUSCH retransmission, the frequency offset for the second hop [6, TS 38.214] is given in Table 8.3-1.

**Table 8.3-1: Frequency offset for second hop of PUSCH transmission with frequency hopping scheduled by RAR UL grant or of Msg3 PUSCH retransmission**

| Number of PRBs in initial UL BWP | Value of $N_{UL,hop}$ Hopping Bits | Frequency offset for 2nd hop |
|---|---|---|
| $N_{BWP}^{size} < 50$ | 0 | $\lfloor N_{BWP}^{size}/2 \rfloor$ |
| | 1 | $\lfloor N_{BWP}^{size}/4 \rfloor$ |
| $N_{BWP}^{size} \geq 50$ | 00 | $\lfloor N_{BWP}^{size}/2 \rfloor$ |
| | 01 | $\lfloor N_{BWP}^{size}/4 \rfloor$ |
| | 10 | $-\lfloor N_{BWP}^{size}/4 \rfloor$ |
| | 11 | Reserved |

...

As defined above, in a conventional RA procedure for initial access, Msg3 FDRA and FH are determined based on an initial UL bandwidth. Here, an initial UL bandwidth means a bandwidth of an initial UL BWP.

However, if an initial UL BWP is not limited within a max UE bandwidth of a redcap UE due to legacy impact in an NR cell that simultaneously supports a normal UE and a redcap UE (i.e., when an initial UL bandwidth is greater than a redcap UE bandwidth), the following Msg3 PUSCH transmission method of a redcap UE may be considered.

In the following proposed methods, when configuring and operating a separate initial UL BWP for a redcap UE for the above reasons, a redcap UE bandwidth may include the meaning of a separate initial UL BWP for redcap or a bandwidth of a separate initial UL BWP. A bandwidth of a separate initial UL BWP for a Redcap UE may be limited to less than a redcap UE bandwidth.

For the above reasons, in the present disclosure, the meaning of "a bandwidth of an initial UL BWP, or an initial UL bandwidth is greater than a redcap UE bandwidth" or "a base station should configure an initial UL bandwidth for a normal UE to be greater than a redcap UE bandwidth" may include the meaning of "a separate initial UL BWP for a redcap is configured/was configured" for that reason.

Embodiment 2-1: Method of deactivation (off or disabled) frequency hopping (FH) when initial UL bandwidth is greater than redcap UE bandwidth

When an initial UL bandwidth for a normal UE needs to be configured larger than a redcap UE bandwidth, a base station may turn off (or disable) FH of a Msg3 PUSCH of a redcap UE and schedule the first frequency hop indicated by FDRA of an RAR UL grant to be included in a redcap UE bandwidth. Accordingly, a base station can receive both PUSCH transmissions of a normal UE and a redcap UE. For this purpose, a base station may configure a value of a FH flag of an RAR UL grant to 0. The FH flag of the RAR UL grant may be configured separately and be used to enable/disable FH of a redcap UE. Alternatively, if an initial UL bandwidth is greater than a redcap UE bandwidth, a redcap UE may assume that FH is off (or a FH flag value is 0) and transmit a Msg3 PUSCH through a frequency region indicated by FDRA of the RAR UL grant to a base station in the above manner.

FIG. 11 is a diagram illustrating frequency resource allocation of an Msg3 PUSCH without frequency hopping according to an embodiment of the present disclosure.

In FIG. 11, when an initial UL bandwidth of a normal UE is greater than a redcap UE bandwidth, a case where a base station schedules a Msg3 PUSCH of a redcap UE within a redcap UE bandwidth without FH is exemplified.

Referring to FIG. 11, a redcap UE may perform transmission on the first frequency hop (1101) of a Msg PUSCH through a frequency region indicated by FDRA of an RAR UL grant. And, a redcap UE may perform, without frequency hopping (by an indication of a base station or by an assumption of a UE), transmission for the second frequency hop (1102) of a Msg PUSCH transmission through a frequency region indicated by FDRA of an RAR UL grant.

Embodiment 2-2: Method for differently interpreting FDRA and/or FH flag of RAR UL Grant

When a base station needs to configure an initial UL bandwidth for a normal UE to be larger than a redcap UE bandwidth, a redcap UE may apply/interpret PUSCH scheduling information/result indicated by FDRA and/or a FH flag of an RAR UL grant or field values such as FDRA and/or a FH flag differently from a normal UE. Here, when an initial UL bandwidth is greater than a redcap UE bandwidth, PUSCH scheduling information/result indicated by FDRA and/or a FH flag of an RAR UL grant may be the following cases.

[Case 1] When the first frequency hop belongs to/is included in a redcap UE bandwidth, and the second frequency hop does not belong to/is not included in a redcap UE bandwidth
[Case 2] When the first frequency hop does not belong to/is not included in a redcap UE bandwidth, and the second frequency hop belongs to/is included in a redcap UE bandwidth
[Case 3] When both the first frequency hop and the second frequency hop belong to/are included in a redcap UE bandwidth
[Case 4] When both the first frequency hop and the second frequency hop does not belong to/is not included in a redcap UE bandwidth

As in Cases 1 and 2, when FH of a Msg3 PUSCH is enabled and only one of two frequency hops belongs to a redcap UE bandwidth, a base station may configure/indicate to transmit both the first hop and the second hop without FH using a frequency resource of the hop belonging to the redcap UE bandwidth.

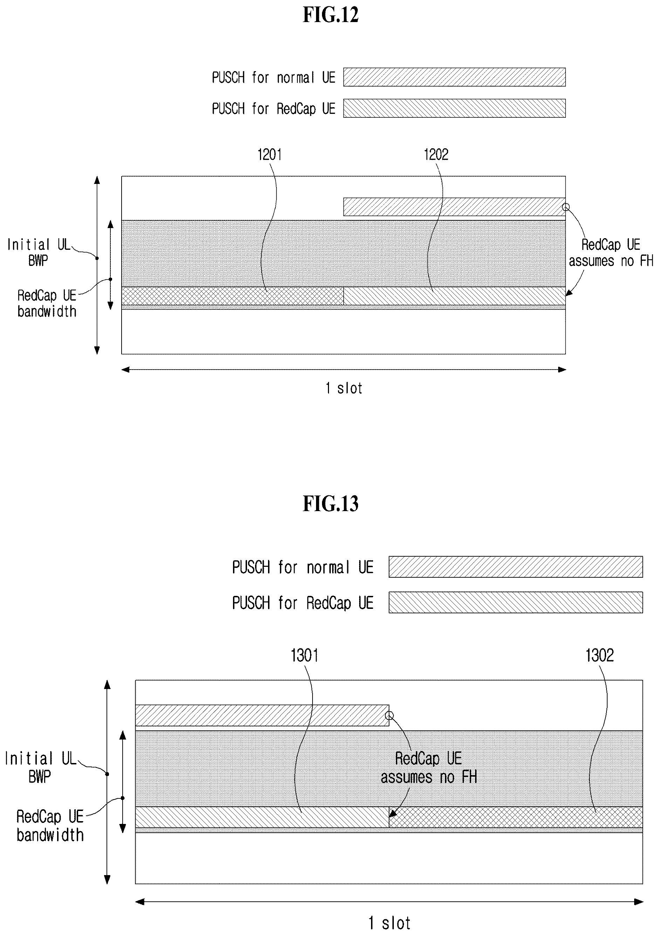

FIG. 12 to FIG. 14 are diagrams illustrating frequency resource allocation of Msg3 PUSCH considering frequency hopping according to an embodiment of the present disclosure.

FIG. 12 illustrates the Case 1. Referring to FIG. 12, a redcap UE may perform transmission for the 1st frequency hop (1201) and the 2nd frequency hop (1202) in a frequency region of the 1st frequency hop or indicated by FDRA of an RAR UL grant without FH. In other words, a redcap UE may perform transmission on the 1st frequency hop (1201) of a Msg PUSCH through a frequency region indicated by FDRA of an RAR UL grant. And, assuming that there is no frequency hopping, a redcap UE can perform transmission on the 2nd frequency hop (1202) of a Msg PUSCH through a frequency region indicated by FDRA of an RAR UL grant or a frequency region of the 1st frequency hop.

FIG. 13 illustrates the Case 2. Referring to FIG. 13, a redcap UE may perform transmission for the 1st frequency hop (1301) and the 2nd frequency hop (1302) without FH in a frequency region of the 2nd hop belonging to a redcap UE bandwidth. In other words, a redcap UE may perform transmission for both the 1st frequency hop (1301) of a Msg PUSCH and the 2nd frequency hop (1302) of a Msg PUSCH through a frequency region of the 2nd frequency hop (1302) of a Msg PUSCH determined by FDRA of an RAR UL grant.

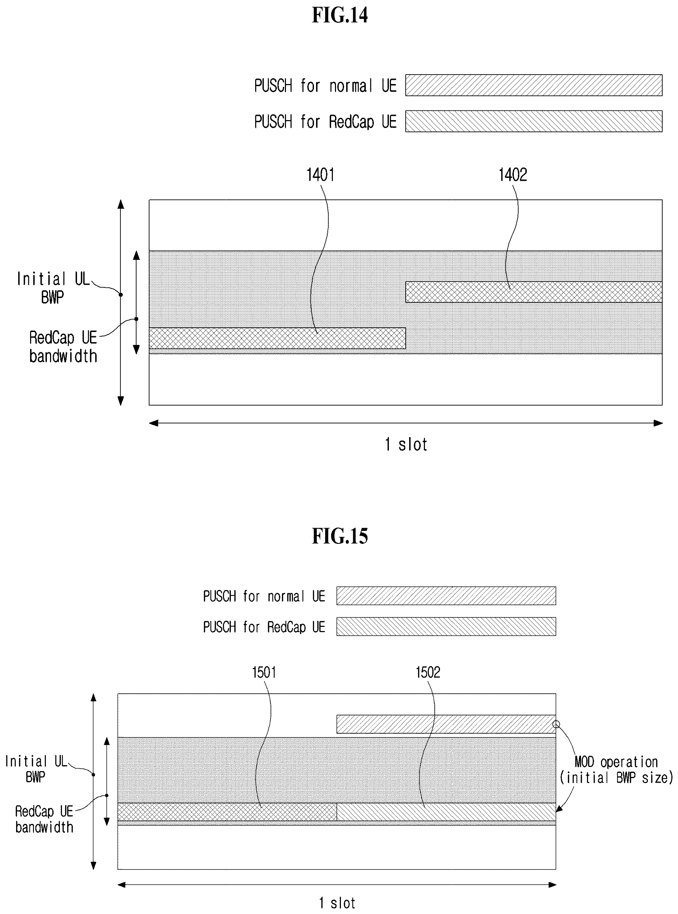

FIG. 14 illustrates the Case 3. Referring to FIG. 14, both the 1st frequency hop (1401) of a Msg PUSCH and the 2nd frequency hop (1402) of a Msg PUSCH may belong to/be include in a redcap UE bandwidth. In this case, a redcap UE may perform transmission for the 1st frequency hop (1401) of Msg PUSCH and the 2nd frequency hop (1402) of Msg PUSCH in each frequency region indicated by FDRA and a FH flag (FH on) of an RAR UL grant.

In the case of Case 4, a redcap UE may transmit a Msg3 PUSCH without FH through the 1st frequency hop (or 2nd frequency hop). However, since the 1st frequency hop (or 2nd frequency hop) does not belong to an initial UL bandwidth received by a redcap UE through system information (e.g., SIB1), the redcap UE can perform Msg3 PUSCH transmission after frequency retuning.

Alternatively, in this case, a redcap UE considers that a corresponding cell has barred the redcap UE or does not allow access of the redcap UE, and the redcap UE may continue to perform a cell search process for other accessible cell(s).

Alternatively, a base station may bar a redcap UE by configuring/indicating that some or all of a Msg3 PUSCH indicated by FDRA and/or a FH flag value of an RAR UL grant do not belong to a redcap UE bandwidth or an initial UL bandwidth of a redcap UE. Alternatively, a base station may bar a redcap UE by making a Msg3 PUSCH scheduling result indicated by FDRA and/or a FH flag value of an RAR UL grant belong to one of Case 1, Case 2, or Case 4 above.

Meanwhile, Msg3 PUSCH scheduling information may be interpreted based on a Redcap initial UL bandwidth.

A RedCap UE may determine the final hop(s) by applying a modulo (MOD) operation (for hop(s) that do not belong) based on its own (separate) initial UL bandwidth. A redcap initial UL bandwidth as a criterion may be configured cell-specifically by a base station through system information (e.g., SIB1). Otherwise, initial UL bandwidth information of a redcap UE may be transmitted early to a base station in the Msg1 step. For convenience of MOD operation, it may be limited with normal UE initial UL bandwidth = N * (RedCap UE initial UL bandwidth) (e.g., N = 1,2,4,8, or a positive integer). For example, a separate initial UL BWP for a redcap can be configured to have a bandwidth value of floor(initial_UL_bandwidth/N). Here, floor(x) is the largest integer not greater than x. Here, initial_UL_bandwidth means a bandwidth of an initial UL BWP for a normal UE and may be in RB units.

FIG. 15 is a diagram illustrating frequency resource allocation of Msg3 PUSCH to which MOD operation is applied according to an embodiment of the present disclosure.

In FIG. 15, a case where a separate initial UL BWP for a redcap has a bandwidth of floor (initial_UL_bandwidth/2) (i.e., N=2) is exemplified. Referring to FIG. 15, a redcap UE may perform transmission for the 1st frequency hop (1501) of a Msg PUSCH through a frequency region indicated by FDRA of an RAR UL grant. In addition, a redcap UE may perform transmission for the 2nd frequency hop (1502) of a Msg PUSCH through a frequency region determined by applying the MOD operation as described above.

According to the example of FIG. 15, a result of performing a modulo operation based on a redcap UE's initial UL bandwidth may result in not obtaining a frequency diversity gain. In order to improve these disadvantages, a method of arranging/determining hops at frequency positions that are symmetrical based on a boundary of a redcap initial UL bandwidth rather than a simple modulo operation may be considered.

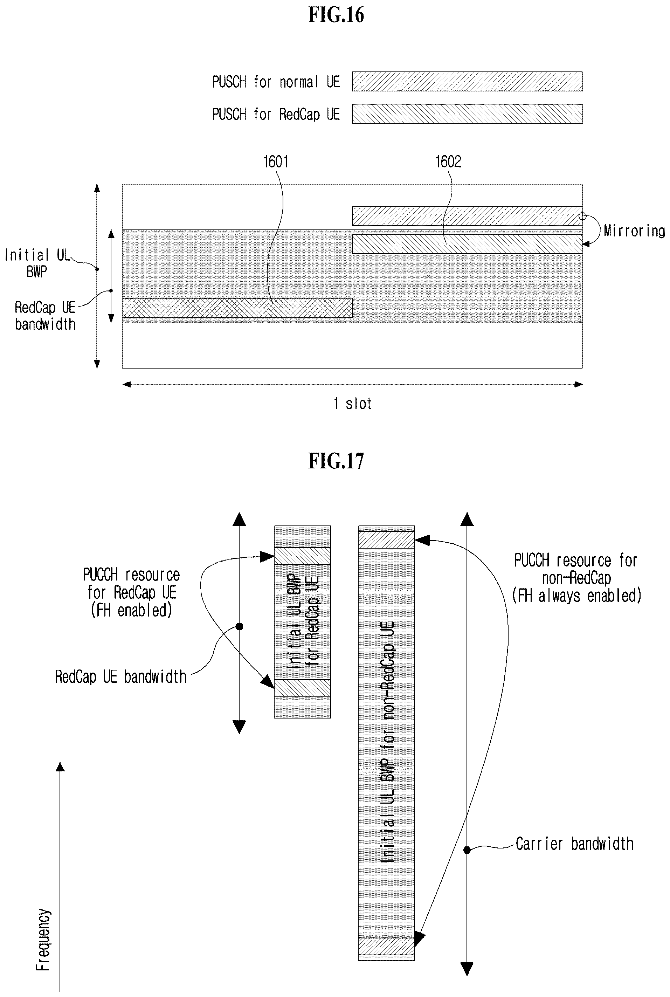

FIG. 16 is a diagram illustrating frequency resource allocation of Msg3 PUSCH to which mirroring is applied according to an embodiment of the present disclosure.

In FIG. 16, when the 2nd frequency hop is out of a redcap UE initial bandwidth, the 2nd frequency hop can be deployed by mirroring based on an upper boundary of a redcap initial UL bandwidth. In other words, referring to FIG. 16, a redcap UE may perform transmission for the 1st frequency hop (1601) of a Msg PUSCH through a frequency region indicated by FDRA of an RAR UL grant. In addition, a redcap UE may perform transmission for the 2nd frequency hop (1602) of a Msg PUSCH through a frequency region determined through mirroring based on an upper boundary of a redcap initial UL bandwidth as described above.

By doing this, contrary to the example of FIG. 15, a frequency diversity gain can be expected.

Alternatively, in the case of a redcap UE, a Msg3 PUSCH can be transmitted in a frequency region distinct from a normal UE according to transmitting by applying a frequency offset to an FDRA value of an RAR UL grant. Compared to a method in which some frequency hops overlap, this method may have an advantage in that detection in a base station is easy. Alternatively, in the case of indicating FH activation (enable or on) in an RAR UL grant, a frequency offset value of the 2nd hop may be interpreted differently from the conventional one or may be configured/defined to apply an additional frequency offset to a frequency offset value of the conventional 2nd hop.

When a frequency offset value of the 2nd hop is interpreted differently from the prior art, a redcap UE may apply by multiplying a location value of the 2nd hop calculated based on Table 8.3-1 (see Table 12) of TS 38.213 by a scaling factor. For example, a scaling factor may be redcap_UE_initial_UL_bandwidth/normal_UE_initial_UL_bandwidth. Alternatively, a position on in a frequency domain of the 2nd hop may be determined by applying a UE bandwidth of a redcap UE or an initial UL bandwidth of a redcap UE instead of an initial UL bandwidth of a normal UE.

For the above embodiments 2-1 and 2-2, a redcap UE bandwidth may be interpreted by substituting an RO bandwidth configured to be used by a RedCap UE for initial access. That is, based on an RO bandwidth, FH deactivation (off or disabled) may be determined, FH may be performed, or FDRA may be analyzed. Here, an RO may be configured separately for a RedCap UE, or may be an RO configured for an NR UE without a separate configuration. In this case, a RedCap UE may operate by assuming that an RO bandwidth is an initial UL BWP of a RedCap UE.

Embodiment 2-3: redcap UE identification through Msg3 PUSCH transmission

When Msg3 PUSCHs of a normal UE and a redcap UE are transmitted using resources differentiated in a time/frequency domain or different FH patterns by the methods proposed above, a base station can distinguish a UE (type) (e.g., normal UE or redcap UE) by performing blind detection (BD) on a Msg3 PUSCH's time/frequency transmission resource or an FH pattern classified as above. This method can be used to distinguish from a normal UE in the Msg3 step when an early UE ID is not supported in Msg1.

Alternatively, it may be used for providing additional UE (type) information together with an early UE ID in Msg1. For example, additional UE (type) information may include information on the number of Rx antenna branches (or ports) or information indicating whether a specific feature of a redcap UE is supported, etc.

Also, this method can be applied for (additional) UE identification even when it is equal to a size of an initial UL bandwidth of a normal UE. Classification of Msg3 PUSCH resources may not be limited to a frequency domain. For example, by interpreting a time domain resource allocation (TDRA) value indicated by an RAR UL grant differently (e.g., by applying an additional offset) or in a form of TDM, Msg3 PUSCHs of a normal UE and a redcap UE can be configured/defined to be transmitted separately.

Embodiment 2-4: After transmitting a Msg3 PUSCH by one of the aforementioned methods, a redcap UE may be indicated to retransmit a Msg3 PUSCH from a base station. In this case, Msg3 PUSCH retransmission may be indicated through DCI format 0_0 with a cyclic redundancy check (CRC) scrambled by a temporary cell (TC)-RNTI. When Msg3 PUSCH retransmission is indicated through DCI, information such as FDRA/TDRA and FH for Msg3 PUSCH retransmission may follow the Msg3 retransmission DCI indication. If an initial UL bandwidth is larger than a redcap UE bandwidth, the method proposed in an RAR UL grant can be applied to the interpretation/operation of FDRA / TDRA and / or FH.

If a redcap UE fails in Msg3 initial transmission and is indicated to retransmit, the redcap UE may use a resource distinguished from a normal UE in a method different from the initial transmission. For example, when a redcap UE transmits a frequency resource such as FDRA and a FH pattern separately from a normal UE in initial transmission, the redcap UE indicated to retransmit may transmit by applying a time offset to a TDRA value or by using a resource differentiated from a normal UE in a TDM manner.

Embodiment 3: method of initial access and PUCCH transmission of redcap UE

A PUCCH transmission method before the UE receives a dedicated PUCCH resource configuration is defined in TS 38.213 spec as shown in Table 13 below.

【Table 13】

## TS 38.213

## 9.2.1 PUCCH Resource Sets

If a UE does not have dedicated PUCCH resource configuration, provided by *PUCCH-ResourceSet* in *PUCCH-Config*, a PUCCH resource set is provided by *pucch-ResourceCommon* through an index to a row of Table 9.2.1-1 for transmission of HARQ-ACK information on PUCCH in an initial UL BWP of $N_{BWP}^{size}$ PRBs.

The PUCCH resource set includes sixteen resources, each corresponding to a PUCCH format, a first symbol, a duration, a PRB offset $RB_{BWP}^{offset}$, and a cyclic shift index set for a PUCCH transmission.

The UE transmits a PUCCH using frequency hopping if not provided *useInterlacePUCCH-PUSCH* in *BWP-UplinkCommon*; otherwise, the UE transmits a PUCCH without frequency hopping.

An orthogonal cover code with index 0 is used for a PUCCH resource with PUCCH format 1 in Table 9.2.1-1.

The UE transmits the PUCCH using the same spatial domain transmission filter as for a PUSCH transmission scheduled by a RAR UL grant as described in Clause 8.3.

If a UE is not provided *pdsch-HARQ-ACK-Codebook*, the UE generates at most one HARQ-ACK information bit.

If the UE provides HARQ-ACK information in a PUCCH transmission in response to detecting a DCI format scheduling a PDSCH reception or a SPS PDSCH release, the UE determines a PUCCH resource with index $r_{PUCCH}$, $0 \le r_{PUCCH} \le 15$, as $r_{PUCCH} = \left\lceil \frac{2 \cdot n_{CCE,0}}{N_{CCE}} \right\rceil + 2 \cdot \Delta_{PRI}$, where $N_{CCE}$ is a number of CCEs in a CORESET of a PDCCH reception with the DCI format, as described in Clause 10.1, $n_{CCE,0}$ is the index of a first CCE for the PDCCH reception, and $\Delta_{PRI}$ is a value of the PUCCH resource indicator field in the DCI format.

If $\lfloor r_{PUCCH}/8 \rfloor = 0$ and a UE is provided a PUCCH resource by *pucch-ResourceCommon* and is not provided *useInterlacePUCCH-PUSCH-r16* in *BWP-UplinkCommon*

- the UE determines the PRB index of the PUCCH transmission in the first hop as $RB_{BWP}^{offset} + \lfloor r_{PUCCH}/N_{CS} \rfloor$ and the PRB index of the PUCCH transmission in the second hop as $N_{BWP}^{size} - 1 - RB_{BWP}^{offset} - \lfloor r_{PUCCH}/N_{CS} \rfloor$, where $N_{CS}$ is the total number of initial cyclic shift indexes in the set of initial cyclic shift indexes

- the UE determines the initial cyclic shift index in the set of initial cyclic shift indexes as $r_{PUCCH} \bmod N_{CS}$

If $\lfloor r_{PUCCH}/8 \rfloor = 1$ and a UE is provided a PUCCH resource by *pucch-ResourceCommon* and is not provided *useInterlacePUCCH-PUSCH* in *BWP-UplinkCommon*

- the UE determines the PRB index of the PUCCH transmission in the first hop as $N_{BWP}^{size} - 1 - RB_{BWP}^{offset} - \lfloor (r_{PUCCH} - 8)/N_{CS} \rfloor$ and the PRB index of the PUCCH transmission in the second hop as $RB_{BWP}^{offset} + \lfloor (r_{PUCCH} - 8)/N_{CS} \rfloor$

- the UE determines the initial cyclic shift index in the set of initial cyclic shift indexes as $(r_{PUCCH} - 8) \bmod N_{CS}$

...

**Table 9.2.1-1: PUCCH resource sets before dedicated PUCCH resource configuration**

| Index | PUCCH format | First symbol | Number of symbols | PRB offset $RB_{BWP}^{offset}$ | Set of initial CS indexes |
|-------|-------------|-------------|-------------------|-------------------------------|---------------------------|
| 0 | 0 | 12 | 2 | 0 | {0, 3} |

| 1 | 0 | 12 | 2 | 0 | {0, 4, 8} |
|---|---|----|---|---|-----------|
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{\mathrm{BWP}}^{\mathrm{size}}/4 \right\rfloor$ | {0, 3, 6, 9} |

Referring to Table 13, a UE transmits a PUCCH using frequency hopping if a configuration for interlace (useInterlacePUCCH-PUSCH) of a PUCCH and a PUSCH in a configuration for an UL BWP (e.g., BWP-UplinkCommon) is not provided. Otherwise, a UE transmits a PUCCH without frequency hopping.

If a UE provides HARQ-ACK information within PUCCH transmission in response to detection of a DCI format scheduling PDSCH reception or SPS PDSCH release, the UE determines a PUCCH resource with an index $r_{PUCCH}$ ($0 \leq r_{PUCCH} \leq 15$), such as $r_{PUCCH}$=floor($2 \cdot n_{CCE,0}/N_{CCE}$)+$2 \cdot \Delta_{PRI}$ (where floor (x) is the largest integer not greater than x). Here, $N_{CCE}$ is the number of CCEs in a CORESET of PDCCH reception carrying DCI format. $n_{CCE,0}$ is an index of the first CCE for PDCCH reception. $\Delta_{PRI}$ is a value of a PUCCH resource indicator field in a DCI format.

In addition, if floor ($r_{PUCCH}/8$) = 0, a UE determines a PRB index of PUCCH transmission in the first hop as $RB_{BWp}^{off-set}$+floor($r_{PUCCH}/N_{CS}$) and a PRB index of PUCCH transmission in the second hop as $N_{BWP}^{size}$-1-$RB_{BWP}^{offset}$-floor($r_{PUCCH}/N_{CS}$). Here, $N_{CS}$ is the total number of initial CS indices in a set of initial cyclic shift (CS) indices.

On the other hand, if floor($r_{PUCCH}/8$)=1, a UE determines a PRB index of PUCCH transmission in the first hop as $N_{BWP}^{size}$-1-$RB_{BWP}^{offset}$-floor(($r_{PUCCH}$-8)/$N_{CS}$) and a PRB index of PUCCH transmission in the second hop as $RB_{BWP}^{off-set}$+floor(($r_{PUCCH}$-8)/$N_{CS}$). And, a UE determines the total number of initial CS indexes in a set of initial CS indexes as ($r_{PUCCH}$-8)modNcs.

As specified in Table 13 above, before a UE is configured with a dedicated PUCCH resource, the UE is defined/specified to always perform frequency hopping (FH) based on a bandwidth of an initial UL BWP for PUCCH transmission. A FH problem when an initial UL BWP bandwidth is larger than a redcap UE bandwidth can be applied in the same way as proposed in a Msg3 PUSCH. For example, in the above case, the proposed method for a PUCCH can be applied by substituting a Msg3 PUSCH with a PUCCH and interpreting in the methods previously proposed in a Msg3 PUSCH. That is, unlike the conventional normal UE, when an initial UL BWP bandwidth is greater than a redcap UE bandwidth, PUCCH FH disablement can be supported for a RedCap UE. When PUCCH FH is disabled, a PUCCH transmission frequency resource may be determined by a method of determining the first (or second) (PRB index of) frequency hop for PUCCH transmission of a normal UE in the same manner as a PUSCH. That is, when performing random access by configuring a separate initial UL BWP for a RedCap, $N_{BWP}^{size}$, which means a bandwidth of an initial UL BWP for determining a PUCCH transmission frequency resource, may be an initial UL BWP of a normal UE or be substituted with a bandwidth of an initial UL BWP separately configured for a redcap UE.

Also, as in the above Msg3 PUSCH, in the case of a redcap UE, a cell-specific frequency offset may be applied and transmitted in a PUCCH transmission frequency resource for a normal UE. By doing this, it can be configured/defined to transmit a PUCCH in a frequency domain distinct from a normal UE. Here, a PUCCH transmission frequency resource may be determined by reusing (partial settings of) Table 9.2.1-1 in the Table 13 and adding an additional cell-specific frequency offset. To this end, a cell-specific frequency offset may be included in system information (e.g., initial UL BWP configuration BWP-UplinkCommon(-R) of SIB1) and transmitted.

In the present disclosure, for convenience of description, PUCCH FH has been described based on an intra-slot FH, but may be equally applied even when inter-slot FH is supported.

In the present disclosure, PUCCH transmission prior to receiving a dedicated PUCCH resource configuration may include Msg4 ACK/NACK PUCCH transmission in case of 4-step RACH and MsgB ACK/NACK PUCCH transmission in case of supporting 2-step RACH.

To support multiple UE types (e.g., RedCap and non-RedCap) with different UE bandwidths, a base station may configure a common initial (DL/UL) BWP that can be commonly used by a plurality of UE types, or may configure a separate initial (DL/UL) BWP for each UE type. Here, when configuring separately for each UE type, values such as different bandwidths and locations on frequencies may be configured for each initial (DL/UL) BWP.

For example, in a cell supporting a non-RedCap UE and a RedCap UE simultaneously, an initial UL BWP for a non-RedCap UE (hereinafter referred to as iBWP-UL) and an initial UL BWP for a RedCap (hereinafter referred to as iBWP-UL-R) may be separately configured. Here, a size of a bandwidth of an iBWP-UL-R may be smaller than a bandwidth of an iBWP-UL due to a reduced UE bandwidth of a RedCap UE. In addition, a base station may configure an iBWP-UL-R to include all or part of an iBWP-UL on a frequency.

When an iBWP-UL-R is configured to include all or part of an iBWP-UL in a cell in which a RedCap and a non-RedCap coexist, since the iBWP-UL-R occupies a part of the iBWP-UL resource, a UL (particularly PUSCH) resource fragmentation problem may occur in the iBWP-UL. Due to this PUSCH resource fragmentation problem, efficient use of PUSCH transmission resources or scheduling for transmission may be difficult. In order to minimize this problem, a base station may configure an iBWP-UL-R to be located on a band edge (e.g., a lower band edge or an upper band edge) of an iBWP-UL.

FIG. 17 is a diagram illustrating configuration of an initial UL BWP of a normal UE and an initial BWP of a redcap UE according to an embodiment of the present disclosure.

FIG. 17 illustrates a case in which an iBWP-UL-R is disposed on an upper band edge of an iBWP-UL in order to alleviate the problem of PUSCH resource fragmentation in an iBWP-UL.

As shown in the example of FIG. 17, an iBWP-UL-R may be configured to be located on a band edge (lower band edge or upper band edge) of an iBWP-UL. In addition to this, in order to further improve the PUSCH resource fragmentation problem, a method for enabling/disabling intra-slot FH by a configuration of a base station during common PUCCH transmission in an iBWP-UL-R is planned to be introduced. Based on this, the present disclosure proposes the following common PUCCH transmission method and common PUCCH resource determination method in an iBWP-UL-R. In the present disclosure, common PUCCH transmission may mean PUCCH transmission before a UE receives a dedicated PUCCH resource configuration.

FIG. 17 illustrates a case in which frequency hopping is enabled and a PUCCH resource for a redcap UE is frequency hopped within an initial UL BWP for the redcap UE. In addition, as shown in Table 13 above, a non-redcap UE (i.e., a normal UE) can transmit a PUCCH on a PUCCH resource determined using frequency hopping allocated within an initial UL BWP for the non-redcap UE.

Example 3-1: PUCCH transmission using frequency hopping (FH) (and redcap-specific (additional) RB offset)

When transmitting a common PUCCH in an iBWP-UL-R, a RedCap UE indicated to enable FH (or not indicated to disable FH) may determine a PUCCH transmission resource (including physical resource block (PRB) index and initial CS value) using an existing method (refer to Table 13, described in TS 38.213 spec section 9.2.1) and perform PUCCH transmission.

More specifically, when determining a PUCCH transmission resource of a RedCap UE by the method described in TS 38.213 spec section 9.2.1 (see Table 13), $N_{BWP}^{size}$ means a size of an iBWP-UL-R (in PRB units). Here, $N_{BWP}^{size}$ can be configured separately for a RedCap by a base station, or $N_{BWP}^{size}$ can mean a size of an iBWP-UL (in PRB units) when sharing an initial UL BWP with a non-RedCap UE.

In addition, in order to avoid interference between a PUCCH transmission resource and a common PUCCH resource set of an iBWP-UL, all 16 conventional common PUCCH resource sets are supported (e.g., TS 38.213 Table 9.2.1-1 is reused, see Table 13), but a separate (additional) RB offset for a RedCap can be configured. Alternatively, a PUCCH resource set index different from a non-RedCap may be separately set so as not to overlap with a common PUCCH resource set for a non-RedCap. This may be to prevent interference that may occur due to overlapping of some of PUCCH resources between a RedCap and a non-RedCap or performance degradation due to infringement of orthogonality between RedCap and non-RedCap PUCCH transmission resources, and this method may be applied to the proposed methods of all embodiments of the present disclosure.

In the present disclosure, a PUCCH resource RB offset value finally used by a RedCap UE to determine a PUCCH transmission resource is referred to as a $RB_{BWP,R}^{offset}$ for convenience (i.e., used in place of $RB_{BWP}^{offset}$ in the calculation formula described in TS 38.213 spec 9.2.1 of Table 13). Here, when receiving a separate RB offset indication from a base station, a RedCap UE may determine a separately instructed RB offset as a $RB_{BWP,R}^{offset}$ value instead of a $RB_{BWP}^{offset}$ indicated by a PUCCH resource set index. Alternatively, if a configured value is a separate additional RB offset for a RedCap, a $RB_{BWP,R}^{offset}$ value may be determined by adding a $RB_{BWP}^{offset}$ and an additional RB offset indicated. A definition of such a separate (additional) RB offset and a method of determining $RB_{BWP,R}^{offset}$ accordingly may be applied to all methods proposed in the present disclosure.

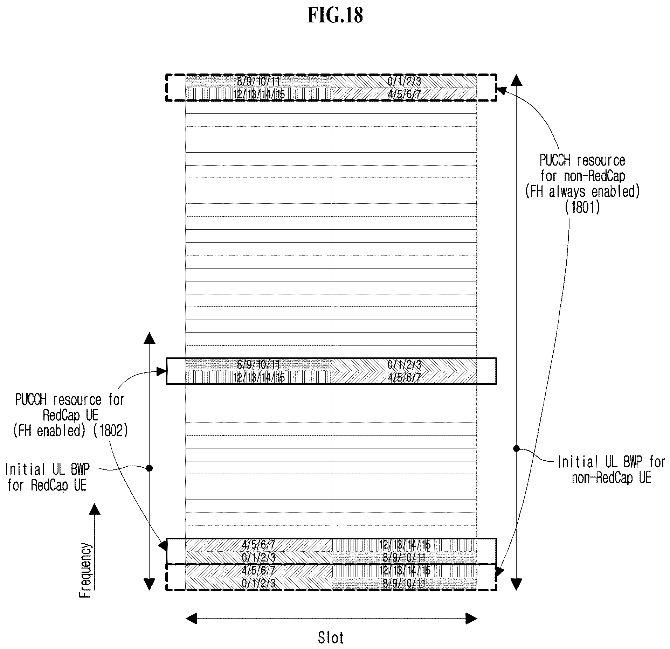

FIG. 18 illustrates PUCCH transmission of a redcap UE using frequency hopping according to an embodiment of the present disclosure.

FIG. 18 illustrates time/frequency resources of a PUCCH resource set (1801) for a non-RedCap UE and a PUCCH resource set (1802) for a RedCap UE. In addition, to indicate whether frequency hopping is performed, a symbol (in time domain)/RB (in frequency domain) area occupied by one PUCCH resource within a PUCCH transmission slot is exemplified with the same pattern. Also, the numbers in each PUCCH transmission RB represent a PUCCH resource index $r_{PUCCH}$. PUCCH resources transmitted in the same PUCCH transmission RB (defined in TS 38.213 Table 9.2.1-1) (see Table 13 above) may be distinguished by $N_{CS}$ different CSs.

Referring to Table 18, a PUCCH resource for a non-redcap UE is determined by using intra-slot frequency hopping within an initial UL BWP (iBWP-UL) for a non-redcap UE. In addition, a PUCCH resource for a redcap UE is determined using intra-slot frequency hopping within an initial UL BWP (iBWP-UL-R) for a redcap UE (by applying the same PUCCH resource determination method of a non-redcap UE), a frequency offset may be additionally applied so as not to overlap with PUCCH resources of a non-redcap UE.

In FIG. 18, it can be interpreted as an example in which PUCCH resource set index = 12 is configured in common for a non-RedCap and a RedCap, and an (additional) RB offset ($RB_{BWP,R}^{offset}$=2) is configured separately only for a RedCap. Alternatively, FIG. 18 may be interpreted as an example in which PUCCH resource set index = 12 is configured for a non-RedCap UE and PUCCH resource set index = 13 is configured for a RedCap.

In addition, although FIG. 18 illustrates the case where an iBWP-UL-R is disposed on a lower band edge of an iBWP-UL, the case where an iBWP-UL-R is disposed on an upper band edge of an iBWP-UL may be also explained in the same way.

Example 3-2: PUCCH transmission without frequency hopping (FH) (and redcap-specific (additional) RB offset)

When a common PUCCH is transmitted in an iBWP-UL-R, a RedCap UE indicated to disable FH (or not indicated to enable FH) (see Table 13 described in TS 38.213 spec section 9.2.1) may perform PUCCH transmission without FH at a RB location of the first frequency hop for PUCCH transmission of a non-RedCap UE (i.e., the second frequency hop is also at the same RB location following the first frequency hop).

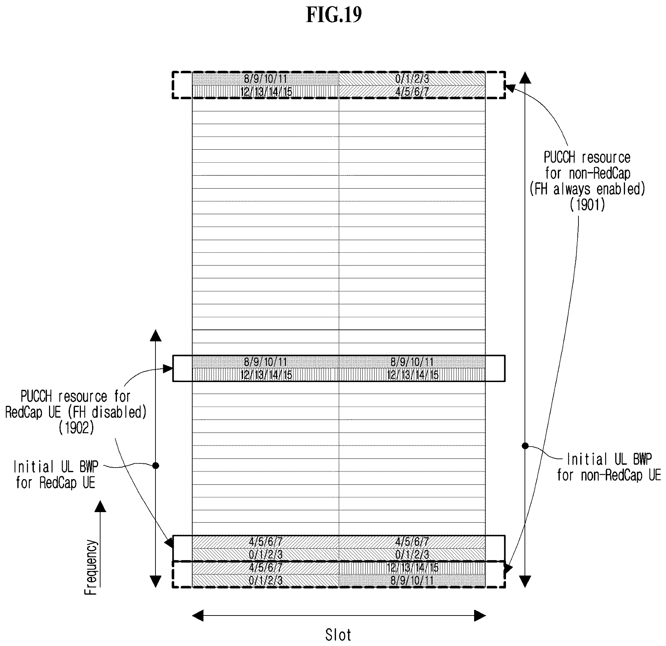

FIG. 19 illustrates PUCCH transmission of a redcap UE without frequency hopping according to an embodiment of the present disclosure.

FIG. 19 illustrates time/frequency resources of a PUCCH resource set (1901) for a non-RedCap UE and a PUCCH resource set (1902) for a RedCap UE. In addition, to indicate whether frequency hopping is performed, a symbol (in time domain)/RB (in frequency domain) area occupied by one PUCCH resource within a PUCCH transmission slot is exemplified with the same pattern. Also, the numbers in each PUCCH transmission RB represent a PUCCH resource index $r_{PUCCH}$. PUCCH resources transmitted in the same PUCCH transmission RB (defined in TS 38.213 Table 9.2.1-1) (see Table 13 above) may be distinguished by $N_{CS}$ different CSs.

Referring to Table 19, a PUCCH resource for a non-redcap UE is determined by using intra-slot frequency hopping within an initial UL BWP (iBWP-UL) for a non-redcap UE.

On the other hand, a PUCCH resource for a redcap UE may be determined without frequency hopping within an initial UL BWP (iBWP-UL-R) for a redcap UE. That is, it corresponds to the same configuration as those of FIG. 18 except for FH disabling. In other words, when compared to Embodiment 3-1, a PUCCH can be transmitted in each PUCCH resource without FH at the first frequency hop position. Here, a frequency offset may be additionally applied so as not to overlap with a PUCCH resource of a non-redcap UE.

In FIG. 19, it can be interpreted as an example in which PUCCH resource set index = 12 is configured in common for a non-RedCap and a RedCap, and an (additional) RB offset ($RB_{BWP,R}^{offset}$=2) is configured separately only for a RedCap. Alternatively, FIG. 19 may be interpreted as an example in which PUCCH resource set index = 12 is configured for a non-RedCap UE and PUCCH resource set index = 13 is configured for a RedCap.

In addition, although FIG. 19 illustrates the case where an iBWP-UL-R is disposed on a lower band edge of an iBWP-UL, the case where an iBWP-UL-R is disposed on an upper band edge of an iBWP-UL may be also explained in the same way.

In the case of embodiment 3-2, a base station can configure a lower band edge, an upper band edge, or both band edges of an iBWP-UL-R to be used for PUCCH transmission by using a specific value(s) from 0 to 15 of $r_{PUCCH}$, which is a PUCCH resource index. For example, when an iBWP-UL-R is configured on a lower band edge of an iBWP-UL as shown in FIG. 19, it is possible to control transmission of a PUCCH only on a lower band edge using values of $r_{PUCCH}$ =0 to 7. Alternatively, when an iBWP-UL-R is configured on an upper band edge of an iBWP-UL, it is possible to control transmission of a PUCCH only on an upper band edge using values of $r_{PUCCH}$ = 8 to 15. When a base station simultaneously supports a RedCap and a non-RedCap, the proposed method of Embodiment 3-2 may be used for the purpose of minimizing the PUSCH resource fragmentation problem described above. Embodiment 3-2 has an advantage of less impact on standard documents by maximally reusing the existing method, but when only one band edge is intended to be used for PUCCH transmission by a configuration of a base station, there may be a disadvantage in that available PUCCH resources become insufficient because a base station can use only some PUCCH resources.

Embodiment 3-3: PUCCH transmission within a single band edge without frequency hopping (FH) (and redcap-specific (additional) RB offset)

In order to support maximum PUCCH resources while minimizing the above-mentioned PUSCH resource fragmentation problem (e.g., to use all 16 PUCCH resource indexes the same as a current non-RedCap), a base station may configure a PUCCH resource set only for contiguous frequency resources on either a lower band edge or an upper band edge (or lower side or upper side even if not edge) of an iBWP-UL-R. Embodiment 3-3 may be applied only when a RedCap and a non-RedCap coexist and an iBWP-UL-R is partially or entirely included in an iBWP-UL. And/or it may be applied only when PUCCH FH for a RedCap is disabled.

Method 1: As one method for supporting Embodiment 3-3, when transmitting a common PUCCH in an iBWP-UL-R, a RedCap UE indicated to disable FH (or not indicated to enable FH) (See Table 13 above, described in TS 38.213 spec section 9.2.1) may perform PUCCH transmission without FH (i.e. the second frequency hop follows the first frequency hop at the same location) at an RB position of the first frequency hop for PUCCH transmission of a non-RedCap UE. In Method 1 of Embodiment 3-3, in order to continuously generate PUCCH transmission PRBs on one band edge (or one side of the band), unlike Embodiment 3-1 or Embodiment 3-2, $N_{BWP}^{size}$ may be substituted with a new value instead of a size of an iBWP-UL-R or an iBWP-UL (in PRB units). When the method of determining an RB location of the first frequency hop for PUCCH transmission described in TS 38.213 spec 9.2.1 in Table 13 is applied, in order for PUCCH transmission PRBs to be continuously generated on one band edge (or one side of the band), in Method 1 of Embodiment 3-3, a value replacing $N_{BWP}^{size}$ may be indicated by a base station through system information (e.g., SIB1) or determined by, for example, the following equation.

【Equation 3】

$$2 \times (RB_{BWP,R}^{offset} + \left\lceil \frac{8}{N_{cs}} \right\rceil)$$

In the present disclosure, for convenience of description, a value substituting $N_{BWP}^{size}$ for the above-described purpose is defined as $N_{BWP,V}^{size}$, which is a virtual (initial) (UL) BWP size. In this case, for example, $N_{BWP,V}^{size}$ may be defined as follows and used in place of $N_{BWP}^{size}$ when calculating a PUCCH transmission RB index.

【Equation 4】

$$N_{BWP,V}^{size} = 2 \times (RB_{BWP,R}^{offset} + \left\lceil \frac{8}{N_{cs}} \right\rceil)$$

In Equations 3 and 4, $\left\lceil \frac{8}{N_{cs}} \right\rceil$ means the number of consecutive PRBs occupied for each band edge by a PUCCH resource set configured in the conventional manner. ⌈ ⌉ denotes a ceiling function (i.e., ceil(x) is the smallest integer not less than x).

More specifically, an initial CS index for determining a PUCCH transmission RB index and an initial CS value may be determined as follows.

- If floor($r_{PUCCH}/8$) = 0 and a UE is provided with a PUCCH resource by a common configuration for a PUCCH resource (e.g., pucch-ResourceCommon) and a configuration for interlace use of a PUCCH and a PUSCH (e.g., useInterlacePUCCH-PUSCH) in a common configuration for an UL BWP (e.g., BWP-UplinkCommon) is not provided, a UE may determine a PRB index of PUCCH transmission, such as $RB_{BWP,R}^{offset}$+ floor($r_{PUCCH}/N_{CS}$). Here, $N_{CS}$ is the total number of initial CS indices in a set of initial CS indices. Also, a UE may determine an initial CS index in a set of initial CS indices, such as $r_{PUCCH}$mod$N_{CS}$.

- On the other hand, if floor($r_{PUCCH}/8$) = 1 and a UE is provided with a PUCCH resource by a common configuration for a PUCCH resource (eg, pucch-ResourceCommon) and a configuration for interlace use of a PUCCH and a PUSCH (e.g., useInterlacePUCCH-PUSCH) in a common configuration for an UL BWP (e.g., BWP-UplinkCommon) is not provided, a UE may determine a PRB index of PUCCH transmission as $N_{BWP,V}^{size}$-1-$RB_{BWP,R}^{offset}$-floor(($r_{PUCCH}$-8)/$N_{CS}$). Here, an initial CS index in a set of initial CS indices may be determined as ($r_{PUCCH}$-8)mod$N_{CS}$.

In the above description, higher layer parameters used to determine a PUCCH transmission RB index and an initial CS index may follow the definitions of TS 38.213 and TS 38.331.

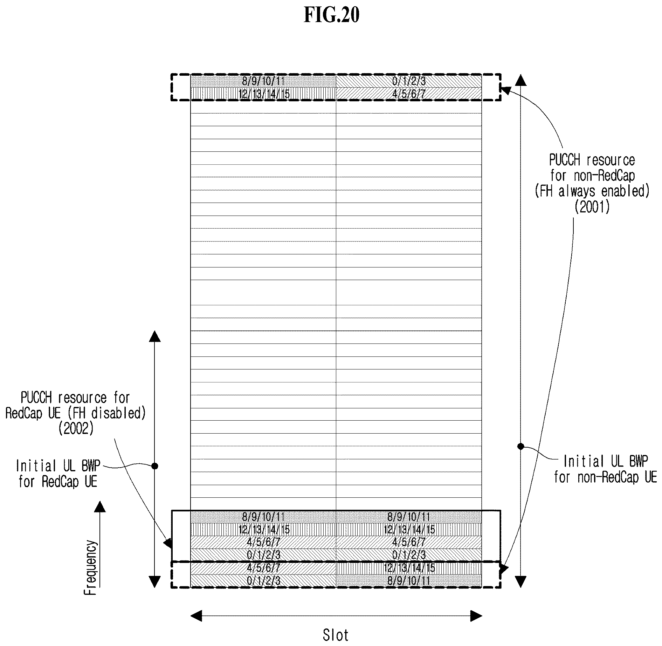

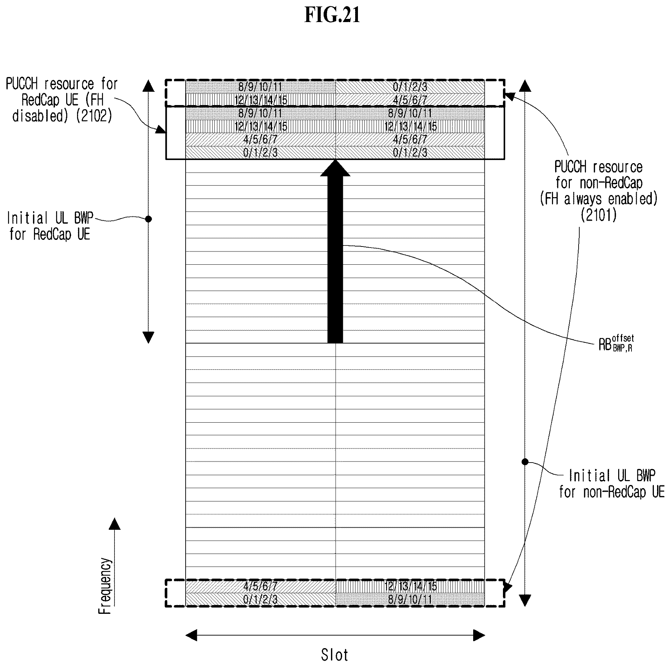

FIG. 20 and FIG. 21 illustrate PUCCH transmission of a redcap UE without frequency hopping according to an embodiment of the present disclosure.

FIG. 20 and FIG. 21 illustrate time/frequency resources of a PUCCH resource set (2001, 2101) for a non-RedCap UE and a PUCCH resource set (2002, 2102) for a RedCap UE. In addition, to indicate whether frequency hopping is performed, a symbol (in time domain)/RB (in frequency domain) area occupied by one PUCCH resource within a PUCCH transmission slot is exemplified with the same pattern. Also, the numbers in each PUCCH transmission RB represent a PUCCH resource index $r_{PUCCH}$. PUCCH resources transmitted in the same PUCCH transmission RB (defined in TS 38.213 Table 9.2.1-1) (see Table 13 above) may be distinguished by $N_{CS}$ different CSs.

FIG. 20 illustrates a case where an initial UL BWP (iBWP-UL-R) for a redcap UE is configured on a lower band edge of an initial UL BWP (iBWP-UL) for a non-redcap UE, and FIG. 21 illustrates a case where an initial UL BWP (iBWP-UL-R) for a redcap UE is configured on an upper band edge of an initial UL BWP (iBWP-UL) for a non-redcap UE. As in Method 1 of Embodiment 3-3, a PUCCH resource set for a redcap UE may be continuously determined on one band edge (or one side of a band) (lower band edge in FIG. 20, upper band edge in FIG. 21).

More specifically, a PUCCH resource for a non-redcap UE is determined by using intra-slot frequency hopping within an initial UL BWP (iBWP-UL) for a non-redcap UE.

On the other hand, a PUCCH resource for a redcap UE, according to Method 1 of Embodiment 3-3, may be determined without frequency hopping within an initial UL BWP (iBWP-UL-R) for a redcap UE. More specifically, $N_{BWP,V}^{size}$ may be determined using $RB_{BWP,R}^{offset}$. And, when $floor(r_{PUCCH}/8) = 0$, an RB position of the first frequency hop for PUCCH transmission of a non-RedCap UE may be determined using $RB_{BWP,R}^{offset}$. In addition, when $floor(r_{PUCCH}/8) = 1$, an RB position of the first frequency hop for PUCCH transmission of a non-RedCap UE may be determined using $RB_{BWP,R}^{offset}$ and $N_{BWP,V}^{size}$. And, PUCCH transmission can be performed without FH at a corresponding RB location (i.e., the second frequency hop follows the first frequency hop at the same RB location).

Here, in order to support the operation of an upper band edge example as shown in FIG. 21, a value of $RB_{BWP,R}^{offset}$ may need to be able to support a range of values from 0 to $N_{BWP}^{size}-4$.

Method 2: As another method for supporting Embodiment 3-3, a redcap indicated to disable FH (or not indicated to enable FH) during common PUCCH transmission in an iBWP-UL-R may perform PUCCH transmission at the determined PUCCH transmission RB position as an RB index sequentially increases in ascending order of a PUCCH resource index, starting with $RB_{BWP,R}^{offset}$ (described in TS 38.213 spec section 9.2.1).

More specifically, an initial CS index for determining a PUCCH transmission RB index and an initial CS value may be determined as follows.

If a UE is provided with a PUCCH resource by a common configuration for a PUCCH resource (e.g., pucch-ResourceCommon) and a configuration for interlace use of a PUCCH and a PUSCH (e.g., useInterlacePUCCH-PUSCH) in a common configuration for an UL BWP (e.g., BWP-UplinkCommon) is not provided, a UE may determine a PRB index of PUCCH transmission, such as $RB_{BWP,R}^{offset} + floor(r_{PUCCH}/N_{CS})$. Here, $N_{CS}$ is the total number of initial CS indices in a set of initial CS indices. Also, a UE may determine an initial CS index in a set of initial CS indices, such as $r_{PUCCH} mod N_{CS}$.

In the above description, higher layer parameters used to determine a PUCCH transmission RB index and an initial CS index may follow the definitions of TS 38.213 and TS 38.331.

Since Method 2 of the Embodiment 3-3 does not require $N_{BWP,V}^{size}$ unlike method 1, calculation or separate signaling for $N_{BWP,V}^{size}$ is not required.

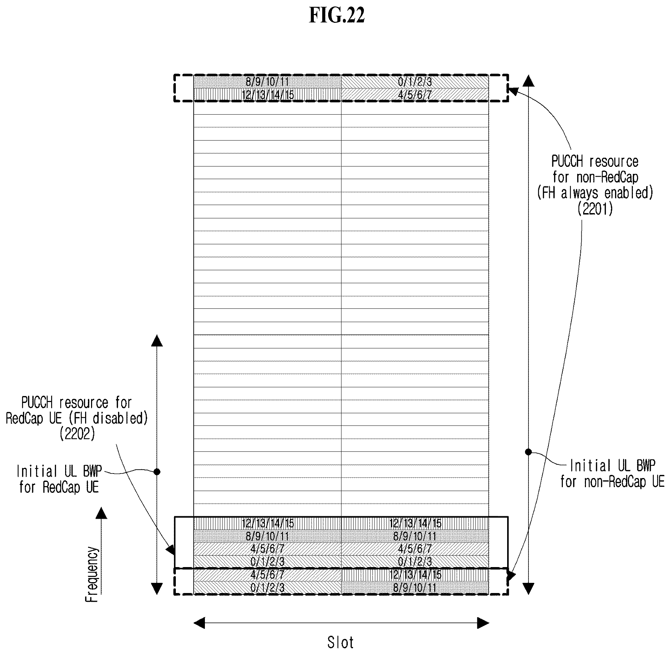

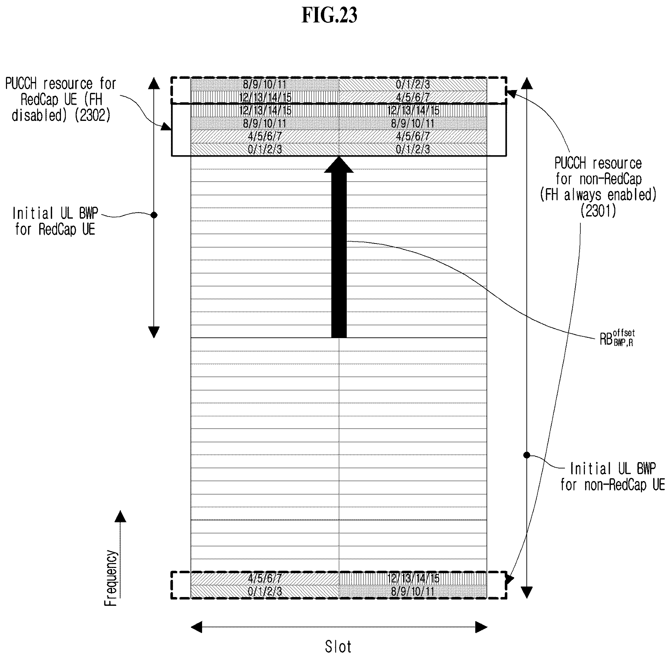

FIG. 22 and FIG. 23 illustrate PUCCH transmission of a redcap UE without frequency hopping according to an embodiment of the present disclosure.

FIG. 22 and FIG. 23 illustrate time/frequency resources of a PUCCH resource set (2201, 2301) for a non-RedCap UE and a PUCCH resource set (2202, 2302) for a RedCap UE. In addition, to indicate whether frequency hopping is performed, a symbol (in time domain)/RB (in frequency domain) area occupied by one PUCCH resource within a PUCCH transmission slot is exemplified with the same pattern. Also, the numbers in each PUCCH transmission RB represent a PUCCH resource index $r_{pUCCH}$. PUCCH resources transmitted in the same PUCCH transmission RB (defined in TS 38.213 Table 9.2.1-1) (see Table 13 above) may be distinguished by $N_{CS}$ different CSs.

FIG. 22 illustrates a case where an initial UL BWP (iBWP-UL-R) for a redcap UE is configured on a lower band edge of an initial UL BWP (iBWP-UL) for a non-redcap UE, and FIG. 23 illustrates a case where an initial UL BWP (iBWP-UL-R) for a redcap UE is configured on an upper band edge of an initial UL BWP (iBWP-UL) for a non-redcap UE. As in Method 2 of Embodiment 3-3, a PUCCH resource set for a redcap UE may be continuously determined on one band edge (or one side of a band) (lower band edge in FIG. 22, upper band edge in FIG. 23).

More specifically, a PUCCH resource for a non-redcap UE is determined by using intra-slot frequency hopping within an initial UL BWP (iBWP-UL) for a non-redcap UE.

On the other hand, a PUCCH resource for a redcap UE, according to Method 1 of Embodiment 3-3, may be determined without frequency hopping within an initial UL BWP (iBWP-UL-R) for a redcap UE. More specifically, a location of a PUCCH transmission RB may be determined as an RB index is sequentially increased in ascending order of a PUCCH resource index starting from $RB_{BWP,R}^{offset}$. And, PUCCH transmission may be performed without FH at a corresponding RB location (i.e., the second frequency hop follows the first frequency hop at the same RB location).

Here, in order to support the operation of an upper band edge example as shown in FIG. 23, a value of $RB_{BWP,R}^{offset}$ may need to be able to support a range of values from 0 to $N_{BWP}^{size}-4$.

Embodiment 3-4: PUCCH transmission within a single band edge without frequency hopping (FH) (including band edge indication)

To support the operation of an upper band edge example, instead of supporting $RB_{BWP,R}^{offset}$ (e.g., 0 to $N_{BWP}^{size}$-4) having a large value range as in Embodiment 3-3, a range of $RB_{BWP,R}^{offset}$ is defined/configured within half of a iBWP-UL-R, and either an upper band or a lower band can be indicated through 1-bit additional information.

Here, the additional 1-bit information may directly inform whether $RB_{BWP,R}^{offset}$ is an RB offset from an upper band edge (i.e., the highest RB index of an iBWP-UL-R) or an RB offset from a lower band edge (i.e., the lowest RB index of an iBWP-UL-R or RB index = 0). Alternatively, the additional 1-bit information may be information that helps a UE interpret $RB_{BWP,R}^{offset}$ by notifying whether an iBWP-UL-R is disposed on an upper band edge or a lower band edge of an iBWP-UL. In this disclosure, additional 1-bit information is referred to as a band edge indicator (BEI) for convenience. For example, BEI = 0 means a lower band edge, BEI = 1 means an upper band edge (and vice versa), or a lower band edge and an upper band edge may be distinguished by true/false. In addition, a BEI may be transmitted to a UE through system information (e.g., SIB1).

If $RB_{BWP,R}^{offset}$ is an RB offset from a lower band edge by a BEI, a PUCCH transmission resource may be determined in the same manner as Example 1 of Method 2 of Embodiment 3-3 (see FIG. 22) or Example 1 of Method 1 of Embodiment 3-3 (see FIG. 20) described above. For this, reference may be made to Embodiment 3-3 above, and a detailed description thereof will be omitted.

Method 1: When $RB_{BWP,R}^{offset}$ is an RB offset from an upper band edge by a BEI, $RB_{BWP,R}^{offset}$ may indicate an offset to the lowest RB index of a PUCCH transmission resource. In this case, a PUCCH transmission RB index may be determined in such a way that a PUCCH transmission RB index increases as a PUCCH resource index (i.e., $r_{PUCCH}$) increases by considering $N_{CS}$ as well.

Here, an initial CS index for determining a PUCCH transmission RB index and an initial CS value may be determined as follows (same as method P2 embodiment 2).

If a UE is provided with a PUCCH resource by a common configuration for a PUCCH resource (e.g., pucch-ResourceCommon) and a configuration for interlace use of a PUCCH and a PUSCH (e.g., useInterlacePUCCH-PUSCH) in a common configuration for an UL BWP (e.g., BWP-UplinkCommon) is not provided, a UE may determine a PRB index of PUCCH transmission, such as $RB_{BWP,R}^{offset}$ + floor($r_{PUCCH}/N_{CS}$). Here, $N_{CS}$ is the total number of initial CS indices in a set of initial CS indices. Also, a UE may determine an initial CS index in a set of initial CS indices, such as $r_{PUCCH}$mod$N_{CS}$.

In the above description, higher layer parameters used to determine a PUCCH transmission RB index and an initial CS index may follow the definitions of TS 38.213 and TS 38.331.

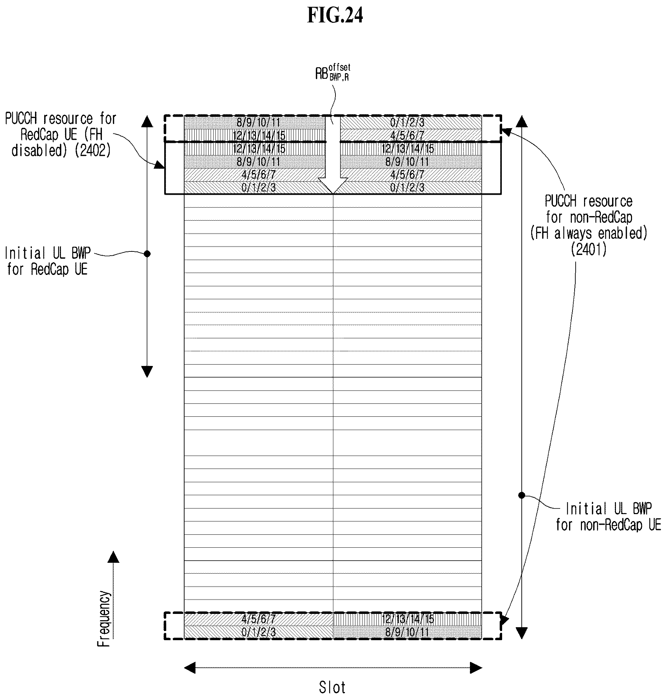

FIG. 24 illustrates PUCCH transmission of a redcap UE without frequency hopping according to an embodiment of the present disclosure.

FIG. 24 illustrates time/frequency resources of a PUCCH resource set (2401) for a non-RedCap UE and a PUCCH resource set (2402) for a RedCap UE. In addition, to indicate whether frequency hopping is performed, a symbol (in time domain)/RB (in frequency domain) area occupied by one PUCCH resource within a PUCCH transmission slot is exemplified with the same pattern. Also, the numbers in each PUCCH transmission RB represent a PUCCH resource index $r_{PUCCH}$. PUCCH resources transmitted in the same PUCCH transmission RB (defined in TS 38.213 Table 9.2.1-1) (see Table 13 above) may be distinguished by $N_{CS}$ different CSs.

FIG. 24 illustrates a case in which $RB_{BWP,R}^{offset}$ is indicated by a BEI as an RB offset from an upper band edge (i.e., the highest RB index of an iBWP-UL-R) or a case in which it is indicated that an initial UL BWP (iBWP-UL-R) for a redcap UE is configured on an upper band edge of an initial UL BWP (iBWP-UL) for a non-redcap UE. As in the above Embodiment 3-4, a PUCCH resource set for a redcap UE may be continuously determined on one band edge (or one side of the band).

More specifically, a PUCCH resource for a non-redcap UE is determined by using intra-slot frequency hopping within an initial UL BWP (iBWP-UL) for a non-redcap UE.

On the other hand, a PUCCH resource for a redcap UE, according to Method 1 of Embodiment 3-4, may be determined without frequency hopping within an initial UL BWP (iBWP-UL-R) for a redcap UE. More specifically, a location of a PUCCH transmission RB may be determined as an RB index is sequentially increased in ascending order of a PUCCH resource index starting from $RB_{BWP,R}^{offset}$. And, PUCCH transmission may be performed without FH at a corresponding RB location (i.e., the second frequency hop follows the first frequency hop at the same RB location).

Method 2: When $RB_{BWP,R}^{offset}$ is an RB offset from an upper band edge by a BEI, $RB_{BWP,R}^{offset}$ may indicate an interval up to the highest (i.e., closest to an upper edge) RB index of PUCCH transmission resources. In this case, a PUCCH transmission RB index may be determined in such a way that a PUCCH transmission RB index decreases as a PUCCH resource index (i.e., $r_{PUCCH}$) increases in consideration of $N_{CS}$ as well.

Here, an initial CS index for determining a PUCCH transmission RB index and an initial CS value may be determined as follows.

If a UE is provided with a PUCCH resource by a common configuration for a PUCCH resource (e.g., pucch-ResourceCommon) and a configuration for interlace use of a PUCCH and a PUSCH (e.g., useInterlacePUCCH-PUSCH) in a common configuration for an UL BWP (e.g., BWP-UplinkCommon) is not provided, a UE may determine a PRB index of PUCCH transmission, such as $RB_{BWP,R}^{offset}$ - floor($r_{PUCCH}/N_{CS}$). Here, $N_{CS}$ is the total number of initial CS indices in a set of initial CS indices. Also, a UE may determine an initial CS index in a set of initial CS indices, such as $r_{PUCCH}modN_{CS}$.

In the above description, higher layer parameters used to determine a PUCCH transmission RB index and an initial CS index may follow the definitions of TS 38.213 and TS 38.331.

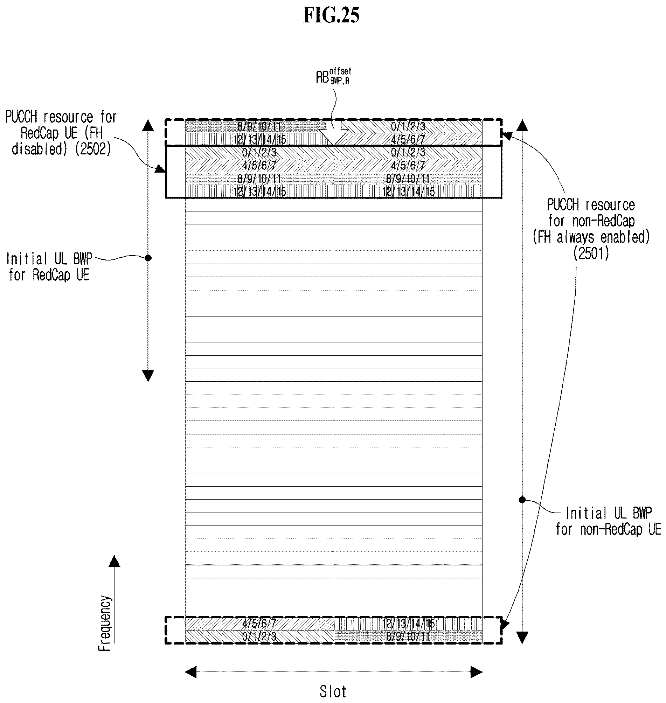

FIG. 25 illustrates PUCCH transmission of a redcap UE without frequency hopping according to an embodiment of the present disclosure.

FIG. 25 illustrates time/frequency resources of a PUCCH resource set (2501) for a non-RedCap UE and a PUCCH resource set (2502) for a RedCap UE. In addition, to indicate whether frequency hopping is performed, a symbol (in time domain)/RB (in frequency domain) area occupied by one PUCCH resource within a PUCCH transmission slot is exemplified with the same pattern. Also, the numbers in each PUCCH transmission RB represent a PUCCH resource index $r_{PUCCH}$. PUCCH resources transmitted in the same PUCCH transmission RB (defined in TS 38.213 Table 9.2.1-1) (see Table 13 above) may be distinguished by $N_{CS}$ different CSs.

FIG. 25 illustrates a case in which $RB_{BWP,R}^{offset}$ is indicated by a BEI as an RB offset from an upper band edge (i.e., the highest RB index of an iBWP-UL-R) or a case in which it is indicated that an initial UL BWP (iBWP-UL-R) for a redcap UE is configured on an upper band edge of an initial UL BWP (iBWP-UL) for a non-redcap UE. As in the above Embodiment 3-4, a PUCCH resource set for a redcap UE may be continuously determined on one band edge (or one side of the band).

More specifically, a PUCCH resource for a non-redcap UE is determined by using intra-slot frequency hopping within an initial UL BWP (iBWP-UL) for a non-redcap UE.

On the other hand, a PUCCH resource for a redcap UE, according to Method 2 of Embodiment 3-4, may be determined without frequency hopping within an initial UL BWP (iBWP-UL-R) for a redcap UE. More specifically, a location of a PUCCH transmission RB may be determined as an RB index is sequentially decreased in ascending order of a PUCCH resource index starting from $RB_{BWP,R}^{offset}$. And, PUCCH transmission may be performed without FH at a corresponding RB location (i.e., the second frequency hop follows the first frequency hop at the same RB location).

Meanwhile, in both Method 1 and Method 2 of Examples 3-4 described above, $RB_{BWP,R}^{offset}$ may indicate an offset from an upper band edge to a PUCCH transmission RB index of the lowest PUCCH resource index (e.g., $r_{PUCCH}=0$) (i.e., may be defined as such).

In addition, in the methods proposed in the present disclosure (e.g., any one or a combination of a plurality of Embodiment 1, Embodiment 2, Embodiment 3, and detailed embodiments of Embodiment 1 to 3), parameters configured/indicated by a base station for common PUCCH transmission of a RedCap UE such as a configuration related to a (separate) initial UL BWP for a RedCap, a separate (additional) RB offset (i.e., $RB_{BWP,R}^{offset}$), a separate PUCCH resource set index, FH enable/disable, a value to substitute $N_{BWP}^{size}$, etc. may be transmitted/configured to a UE through higher layer signaling (e.g., system information such as SIB1).

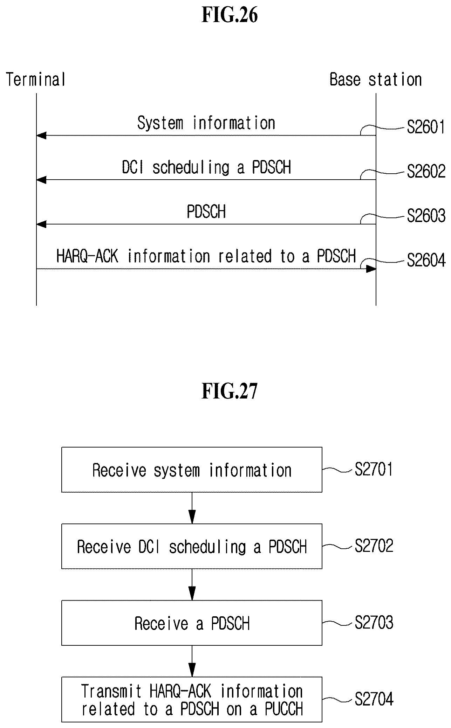

FIG. 26 is a diagram illustrating a signaling procedure between a base station and a terminal for a method for transmitting and receiving a PUCCH according to an embodiment of the present disclosure.

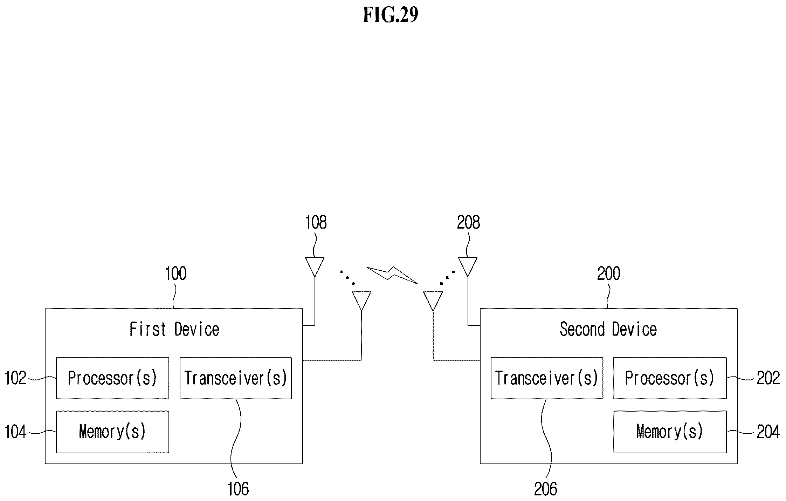

FIG. 26 illustrates a signaling procedure between a terminal (user equipment, UE) and a base station (BS) based on the methods proposed above. The example of FIG. 26 is for convenience of description and does not limit the scope of the present disclosure. Some step(s) illustrated in FIG. 26 may be omitted depending on circumstances and/or configurations. In addition, a base station and a terminal in FIG. 26 are just one example, and may be implemented as a device illustrated in FIG. 29 below. For example, the processor (102/202) of FIG. 29 may control to transmit/receive channels/signals/data/information, etc. using the transceiver (106/206), and may control to store transmitted or received channels/signals/data/information, etc. in the memory (104/204).

In addition, in the operation between a base station and a terminal of FIG. 26, the above-described descriptions may be referenced/used even if there is no separate mention.

A base station may be a general term for objects that transmit and receive data to and from a terminal. For example, a base station may be a concept including one or more transmission points (TPs), one or more transmission and reception points (TRPs), etc. Also, a TP and/or a TRP may include a panel of a base station, a transmission and reception unit, etc. In addition, "TRP" refers to a panel, an antenna array, a cell (e.g., macro cell / small cell / pico cell, etc.), It may be substituted with expressions such as TP (transmission point), base station (base station, gNB, etc.) and applied. As described above, TRPs may be classified according to information (e.g., index, ID) on a CORESET group (or CORESET pool). For example, when one terminal is configured to transmit/receive with multiple TRPs (or cells), this may mean that multiple CORESET groups (or CORESET pools) are configured for one terminal. Configuration of such a CORESET group (or CORESET pool) may be performed through higher layer signaling (e.g., RRC signaling, etc.).

Referring to FIG. 26, for convenience of description, signaling between one base station and a terminal is considered, but the corresponding signaling scheme may be extended and applied to signaling between multiple TRPs and multiple terminals. In the following description, a base station may be interpreted as one TRP. Alternatively, a base station may include a plurality of TRPs, or may be one cell including a plurality of TRPs.

Referring to FIG. 26, a terminal of a specific type (e.g., a redcap terminal) receives system information (e.g., SIB1) from a base station (S2601).

The system information may include configuration information for common PUCCH transmission of a redcap terminal, before a dedicated PUCCH resource configuration is provided to the redcap terminal.

For example, the system information may include parameters such as a configuration related to a (separate) initial UL BWP for a RedCap, a separate (additional) RB offset (i.e., $RB_{BWP,R}^{offset}$), a separate PUCCH resource set index, information indicating FH enable/disable, a value to substitute $N_{BWP}^{size}$, etc.

In addition, system information may include information (hereinafter referred to as first information) on an additional PRB offset in PRB mapping for a PUCCH resource and information (hereinafter referred to as second information) on whether a PRB index in the PRB mapping is counted in increasing order from a lower edge or in decreasing order from an upper edge of an initial uplink bandwidth part (BWP) of the recap terminal.

As described above, a PRB index for PUCCH transmission of a redcap terminal may be determined using a PRB offset ($RB_{BWP}^{offset}$) for determining a set of cell-specific PUCCH resources and the additional PRB offset. That is, a value of $RB_{BWP,R}^{offset}$ may be determined by adding $RB_{BWP}^{offset}$ and the indicated additional RB offset. In this case, system information may further include information (hereinafter referred to as third information) for configuring a set of cell-specific PUCCH resources, and the PRB offset ($RB_{BWP}^{offset}$) may be determined from the third information for configuring a set of cell-specific PUCCH resources.

A terminal receives DCI for scheduling a PDSCH from a base station (S2602), and a terminal receives a PDSCH based on the DCI from a base station (S2603).

Here, DCI may be transmitted through a PDCCH. In addition, as described above, when the method proposed in this disclosure is applied during a random access procedure of a redcap terminal, the PDSCH may carry MSG2, MSG4, or MSGB. Here, MSG2 may mean a PDCCH and a PDSCH for a random access response in a 4-step random access procedure, MSG4 may mean a PDSCH for contention resolution in a 4-step random access procedure, and MSGB may mean a PUSCH scheduled by a random access response UL grant and a PDSCH for contention resolution in a two-step random access procedure.

Here, when the PDSCH carries MSG2, a redcap terminal may receive a PDSCH according to the method(s) proposed in the Embodiment 1. Then, although not shown in FIG. 26, a redcap terminal may transmit MSG3 to a base station based on the method(s) proposed in the Embodiment 2.

A terminal transmits HARQ-ACK information related to the PDSCH to a base station on a PUCCH (S2604).

Here, a redcap terminal may transmit a PUCCH according to the method(s) proposed in the Embodiment 3. In particular, a PRB index for PUCCH transmission may be determined according to the above-described Embodiment 3 (one or a combination of a plurality of detailed embodiments of Embodiment 3).

For example, a PRB index for transmission of the PUCCH may be determined using the additional PRB offset provided by the first information based on the second information.

Here, when the redcap terminal does not receive a dedicated PUCCH resource configuration (e.g., before receiving a dedicated PUCCH resource configuration), a PRB index for transmission of the PUCCH may be determined using the additional PRB offset provided by the first information based on the second information.

In addition, when frequency hopping for transmission of the PUCCH is disabled, a PRB index for transmission of the PUCCH may be determined using the additional PRB offset provided by the first information based on the second information. Here, whether frequency hopping for transmission of the PUCCH is enabled or disabled may be determined based on a configuration by the base station.

In addition, a PRB index for transmission of the PUCCH may be determined using a PRB offset determined by third information for configuring a set of cell-specific PUCCH resources and the additional PRB offset.

For example, if the second information indicates that a PRB index in the PRB mapping is counted in increasing order from a lower edge of an initial BWP of the redcap terminal, cyclic shift (CS), a PRB index may increase as a PUCCH resource index increases in consideration of the number of cyclic shifts (CS). In this case, a PRB index for transmission of a PUCCH may be determined by applying the PRB offset and the additional PRB offset as positive values.

As another example, if the second information indicates that a PRB index in the PRB mapping is counted in decreasing order from an upper edge of an initial BWP of the redcap terminal, a PRB index may decrease as a PUCCH resource index increases in consideration of the number of cyclic shifts (CS). In this case, a PRB index for transmission of a PUCCH may be determined by applying the PRB offset and the additional PRB offset as negative values.

FIG. 27 is a diagram illustrating an operation of a UE for a method for transmitting and receiving a PUCCH according to an embodiment of the present disclosure.

In FIG. 27, an operation of a terminal based on the previously proposed methods is illustrated. The example of FIG. 27 is for convenience of description and does not limit the scope of the present disclosure. Some step(s) illustrated in FIG. 27 may be omitted depending on circumstances and/or configurations. In addition, a terminal in FIG. 27 is only one example, and may be implemented as a device illustrated in FIG. 29 below. For example, the processor (102/202) of FIG.

29 may control to transmit/receive channels/signals/data/information, etc. using the transceiver (106/206), and may control to store transmitted or received channels/signals/data/information, etc. in the memory (104/204).

Referring to FIG. 27, a terminal of a specific type (e.g., a redcap terminal) receives system information (e.g., SIB1) from a base station (S2701).

The system information may include configuration information for common PUCCH transmission of a redcap terminal, before a dedicated PUCCH resource configuration is provided to the redcap terminal.

For example, the system information may include parameters such as a configuration related to a (separate) initial UL BWP for a RedCap, a separate (additional) RB offset (i.e., $RB_{BWP,R}^{offset}$), a separate PUCCH resource set index, information indicating FH enable/disable, a value to substitute $N_{BWP}^{size}$, etc.

In addition, system information may include information (hereinafter referred to as first information) on an additional PRB offset in PRB mapping for a PUCCH resource and information (hereinafter referred to as second information) on whether a PRB index in the PRB mapping is counted in increasing order from a lower edge or in decreasing order from an upper edge of an initial uplink bandwidth part (BWP) of the recap terminal.

As described above, a PRB index for PUCCH transmission of a redcap terminal may be determined using a PRB offset ($RB_{BWP}^{offset}$) for determining a set of cell-specific PUCCH resources and the additional PRB offset. That is, a value of $RB_{BWP,R}^{offset}$ may be determined by adding $RB_{BWP}^{offset}$ and the indicated additional RB offset. In this case, system information may further include information (hereinafter referred to as third information) for configuring a set of cell-specific PUCCH resources, and the PRB offset ($RB_{BWP}^{offset}$) may be determined from the third information for configuring a set of cell-specific PUCCH resources.

A terminal of a specific type (e.g., redcap terminal) receives DCI for scheduling a PDSCH from a base station (S2702), and a terminal of a specific type (e.g., redcap terminal) receives a PDSCH based on the DCI from a base station (S2703).

Here, DCI may be transmitted through a PDCCH. In addition, as described above, when the method proposed in this disclosure is applied during a random access procedure of a redcap terminal, the PDSCH may carry MSG2, MSG4, or MSGB. Here, MSG2 may mean a PDCCH and a PDSCH for a random access response in a 4-step random access procedure, MSG4 may mean a PDSCH for contention resolution in a 4-step random access procedure, and MSGB may mean a PUSCH scheduled by a random access response UL grant and a PDSCH for contention resolution in a two-step random access procedure.

Here, when the PDSCH carries MSG2, a redcap terminal may receive a PDSCH according to the method(s) proposed in the Embodiment 1. Then, although not shown in FIG. 27, a redcap terminal may transmit MSG3 to a base station based on the method(s) proposed in the Embodiment 2.

A terminal of a specific type (e.g., redcap terminal) transmits HARQ-ACK information related to the PDSCH to a base station in a PUCCH (S2704).

Here, a redcap terminal may transmit a PUCCH according to the method(s) proposed in the Embodiment 3. In particular, a PRB index for PUCCH transmission may be determined according to the above-described Embodiment 3 (one or a combination of a plurality of detailed embodiments of Embodiment 3).

For example, a PRB index for transmission of the PUCCH may be determined using the additional PRB offset provided by the first information based on the second information.

Here, when the redcap terminal does not receive a dedicated PUCCH resource configuration (e.g., before receiving a dedicated PUCCH resource configuration), a PRB index for transmission of the PUCCH may be determined using the additional PRB offset provided by the first information based on the second information.

In addition, when frequency hopping for transmission of the PUCCH is disabled, a PRB index for transmission of the PUCCH may be determined using the additional PRB offset provided by the first information based on the second information. Here, whether frequency hopping for transmission of the PUCCH is enabled or disabled may be determined based on a configuration by the base station.

In addition, a PRB index for transmission of the PUCCH may be determined using a PRB offset determined by third information for configuring a set of cell-specific PUCCH resources and the additional PRB offset.

For example, if the second information indicates that a PRB index in the PRB mapping is counted in increasing order from a lower edge of an initial BWP of the redcap terminal, a PRB index may increase as a PUCCH resource index increases in consideration of the number of cyclic shifts (CS). In this case, a PRB index for transmission of a PUCCH may be determined by applying the PRB offset and the additional PRB offset as positive values.

As another example, if the second information indicates that a PRB index in the PRB mapping is counted in decreasing order from an upper edge of an initial BWP of the redcap terminal, a PRB index may decrease as a PUCCH resource index increases in consideration of the number of cyclic shifts (CS). In this case, a PRB index for transmission of a PUCCH may be determined by applying the PRB offset and the additional PRB offset as negative values.

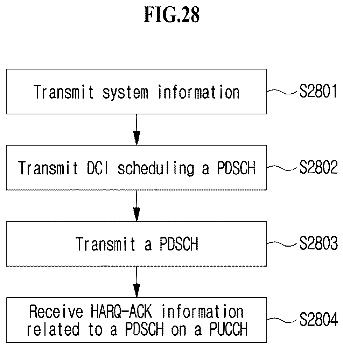

FIG. 28 is a diagram illustrating an operation of a base station for a method for transmitting and receiving a PUCCH according to an embodiment of the present disclosure.

In FIG. 28, an operation of a base station based on the previously proposed methods is illustrated. The example of FIG. 28 is for convenience of description and does not limit the scope of the present disclosure. Some step(s) illustrated in FIG. 28 may be omitted depending on circumstances and/or configurations. In addition, a base station in FIG. 28 is only one example, and may be implemented as a device illustrated in FIG. 29 below. For example, the processor (102/202) of FIG. 29 may control to transmit/receive channels/signals/data/information, etc. using the transceiver (106/206), and may control to store transmitted or received channels/signals/data/information, etc. in the memory (104/204).

Referring to FIG. 28, a base station transmits system information (e.g., SIB1) to a terminal of a specific type (e.g., a redcap terminal) (S2801).

The system information may include configuration information for common PUCCH transmission of a redcap terminal, before a dedicated PUCCH resource configuration is provided to the redcap terminal.

For example, the system information may include parameters such as a configuration related to a (separate) initial UL BWP for a RedCap, a separate (additional) RB offset (i.e., $RB_{BWP,R}^{offset}$), a separate PUCCH resource set index, information indicating FH enable/disable, a value to substitute $N_{BWP}^{size}$, etc.

In addition, system information may include information (hereinafter referred to as first information) on an additional PRB offset in PRB mapping for a PUCCH resource and information (hereinafter referred to as second information) on whether a PRB index in the PRB mapping is counted in increasing order from a lower edge or in decreasing order from an upper edge of an initial uplink bandwidth part (BWP) of the recap terminal.

As described above, a PRB index for PUCCH transmission of a redcap terminal may be determined using a PRB offset ($RB_{BWP}^{offset}$) for determining a set of cell-specific PUCCH resources and the additional PRB offset. That is, a value of $RB_{BWP,R}^{offset}$ may be determined by adding $RB_{BWP}^{offset}$ and the indicated additional RB offset. In this case, system information may further include information (hereinafter referred to as third information) for configuring a set of cell-specific PUCCH resources, and the PRB offset ($RB_{BWP}^{offset}$) may be determined from the third information for configuring a set of cell-specific PUCCH resources.

A base station trasnmits DCI for scheduling a PDSCH to a terminal of a specific type (e.g., redcap terminal) (S2802), and a base station transmits a PDSCH based on the DCI to a terminal of a specific type (e.g., redcap terminal) (S2803).

Here, DCI may be transmitted through a PDCCH. In addition, as described above, when the method proposed in this disclosure is applied during a random access procedure of a redcap terminal, the PDSCH may carry MSG2, MSG4, or MSGB. Here, MSG2 may mean a PDCCH and a PDSCH for a random access response in a 4-step random access procedure, MSG4 may mean a PDSCH for contention resolution in a 4-step random access procedure, and MSGB may mean a PUSCH scheduled by a random access response UL grant and a PDSCH for contention resolution in a two-step random access procedure.

Here, when the PDSCH carries MSG2, a base station may transmit a PDSCH to a redcap terminal according to the method(s) proposed in the Embodiment 1. Then, although not shown in FIG. 28, a base station may receive MSG3 from a redcap terminal based on the method(s) proposed in the Embodiment 2.

A base station receives HARQ-ACK information related to the PDSCH from a terminal of a specific type (e.g., redcap terminal) in a PUCCH (S2804).

Here, a redcap terminal may transmit a PUCCH according to the method(s) proposed in the Embodiment 3. In particular, a PRB index for PUCCH transmission may be determined according to the above-described Embodiment 3 (one or a combination of a plurality of detailed embodiments of Embodiment 3).

For example, a PRB index for transmission of the PUCCH may be determined using the additional PRB offset provided by the first information based on the second information.

Here, when the redcap terminal does not receive a dedicated PUCCH resource configuration (e.g., before receiving a dedicated PUCCH resource configuration), a PRB index for transmission of the PUCCH may be determined using the additional PRB offset provided by the first information based on the second information.

In addition, when frequency hopping for transmission of the PUCCH is disabled, a PRB index for transmission of the PUCCH may be determined using the additional PRB offset provided by the first information based on the second information. Here, whether frequency hopping for transmission of the PUCCH is enabled or disabled may be determined based on a configuration by the base station.

In addition, a PRB index for transmission of the PUCCH may be determined using a PRB offset determined by third information for configuring a set of cell-specific PUCCH resources and the additional PRB offset.

For example, if the second information indicates that a PRB index in the PRB mapping is counted in increasing order from a lower edge of an initial BWP of the redcap terminal, cyclic shift (CS), a PRB index may increase as a PUCCH resource index increases in consideration of the number of cyclic shifts (CS). In this case, a PRB index for transmission of a PUCCH may be determined by applying the PRB offset and the additional PRB offset as positive values.

As another example, if the second information indicates that a PRB index in the PRB mapping is counted in decreasing order from an upper edge of an initial BWP of the redcap terminal, a PRB index may decrease as a PUCCH resource index increases in consideration of the number of cyclic shifts (CS). In this case, a PRB index for transmission of a PUCCH may be determined by applying the PRB offset and the additional PRB offset as negative values.

General Device to which the Present Disclosure may be applied

FIG. 29 is a diagram which illustrates a block diagram of a wireless communication device according to an embodiment of the present disclosure.

In reference to FIG. 29, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

Advantageous aspects of the present disclosure may be summarized as follows:

Aspect 1. A method of transmitting a physical uplink control channel (PUCCH) in a wireless communication system, the method performed by a reduced capability (redcap) terminal comprising:

receiving, from a base station, system information, wherein the system information includes first information on an additional physical resource block (PRB) offset in PRB mapping for a PUCCH resource and second information on whether a PRB index in the PRB mapping is counted in increasing order from a lower edge or in decreasing order from an upper edge of an initial uplink bandwidth part (BWP) of the recap terminal;
receiving, from the base station, downlink control information (DCI) scheduling a physical downlink shared channel (PDSCH);
receiving, from the base station, the PDSCH; and
transmitting, to the base station, hybrid automatic repeat request (HARQ)-acknowledgement (ACK) information related to the PDSCH in the PUCCH,
wherein based on frequency hopping for transmission of the PUCCH being disabled, an PRB index for transmission of the PUCCH is determined using the additional PRB offset provided by the first information based on second information.

Aspect 2. The method of aspect 1, wherein the system information includes third information for configuring a set of cell-specific PUCCH resources, and
wherein the PRB index for transmission of the PUCCH is determined using a PRB offset determined by the third information and the additional PRB offset.

Aspect 3. The method of aspect 2, wherein based on the second information indicating that a PRB index in the PRB mapping is counted in increasing order from a lower edge of an initial uplink BWP of the recap terminal, the PRB index for transmission of the PUCCH is determined by applying the PRB offset and the additional PRB offset as positive values.

Aspect 4. The method of aspects 2 or 3, wherein based on the second information indicating that a PRB index in the PRB mapping is counted in decreasing order from an upper edge of an initial uplink BWP of the recap terminal, the PRB index for transmission of the PUCCH is determined by applying the PRB offset and the additional PRB offset as negative values.

Aspect 5. The method of any one of aspects 1 to 4, wherein based on the redcap terminal not receiving a dedicated PUCCH resource configuration, the PRB index for transmission of the PUCCH is determined using the additional PRB offset provided by the first information based on the second information.

Aspect 6. The method of any one of aspects 1 to 5, wherein whether frequency hopping for transmission of the PUCCH is enabled or disabled is determined based on a configuration by the base station.

Aspect 7. The method of any one of aspects 1 to 6, wherein based on the second information indicating that a PRB index in the PRB mapping is counted in an increasing order from a lower edge of an initial BWP of the redcap terminal, a PRB index increases as a PUCCH resource index increases in consideration of a number of cyclic shifts (CS).

Aspect 8. The method of any one of aspects 1 to 7, wherein based on the second information indicating that a PRB index in the PRB mapping is counted in an decreasing order from a upper edge of an initial BWP of the redcap terminal, a PRB index decreases as a PUCCH resource index increases in consideration of a number of cyclic shifts (CS).

Aspect 9. A reduced capability (redcap) terminal of transmitting a physical uplink control channel (PUCCH) in a wireless communication system, the redcap terminal comprising:

at least one transceiver for transmitting and receiving a wireless signal; and
at least one processor for controlling the at least one transceiver,
wherein the at least one processor configured to:

receive, from a base station, system information, wherein the system information includes first information on an additional physical resource block (PRB) offset in PRB mapping for a PUCCH resource and second information on whether a PRB index in the PRB mapping is counted in increasing order from a lower edge or in decreasing order from an upper edge of an initial uplink bandwidth part (BWP) of the recap terminal;
receive, from the base station, downlink control information (DCI) scheduling a physical downlink shared channel (PDSCH);
receive, from the base station, the PDSCH; and
transmit, to the base station, hybrid automatic repeat request (HARQ)-acknowledgement (ACK) information related to the PDSCH in the PUCCH,
wherein based on frequency hopping for transmission of the PUCCH being disabled, an PRB index for transmission of the PUCCH is determined using the additional PRB offset provided by the first information based on second information.

Asepct 10. A base station of receiving a physical uplink control channel (PUCCH) in a wireless communication system, the base station comprising:

at least one transceiver for transmitting and receiving a wireless signal; and
at least one processor for controlling the at least one transceiver,
wherein the at least one processor configured to:

transmit, to a reduced capability (redcap) terminal, system information, wherein the system information includes first information on an additional physical resource block (PRB) offset in PRB mapping for a PUCCH resource and second information on whether a PRB index in the PRB mapping is counted in increasing order from a lower edge or in decreasing order from an upper edge of an initial uplink bandwidth part (BWP) of the recap terminal;
transmit, to the redcap terminal, downlink control information (DCI) scheduling a physical downlink shared channel (PDSCH);
transmit, to the redcap terminal, the PDSCH; and
receive, from the redcap terminal, hybrid automatic repeat request (HARQ)-acknowledgement (ACK) information related to the PDSCH in the PUCCH,
wherein based on frequency hopping for transmission of the PUCCH being disabled, an PRB index for transmission of the PUCCH is determined using the additional PRB offset provided by the first information based on second information.

## Claims

1. A method comprising:

receiving, by a User Equipment, UE, with reduced capability, RedCap, from a Base Station, BS, system information, wherein the system information includes information related to common physical uplink control channel, PUCCH, configuration; and

transmitting, by the UE to the BS, a PUCCH based on the common PUCCH configuration before receiving dedicated PUCCH configuration,

wherein the common PUCCH configuration includes:

i) first information related to a PUCCH resource sets associated with a physical resource block, PRB, offset;
ii) second information related to an additional PRB offset; and
iii) third information for determining a PRB index in a PRB mapping for the PUCCH within a RedCap specific initial uplink, UL, bandwidth part, BWP.

2. The method of claim 1, wherein the system information includes information related to the RedCap specific initial UL BWP.

3. The method of claim 1 or 2, wherein transmitting the PUCCH comprises:

determining, the UE, an PRB index for the PUCCH based on the first information, the second information and the third information; and
transmitting, the UE, the PUCCH based on the determined PRB index.

4. The method of any one of claims 1 to 3, wherein, based on the common PUCCH configuration including the third information, frequency hopping for the PUCCH is disabled.

5. The method of any one of claims 1 to 4, wherein, based on the third information has a first value, the PRB index in the PRB mapping for the PUCCH is counted in increasing order from a lower edge of the RedCap specific initial UL BWP.

6. The method of any one of claims 1 to 5, wherein, based on the third information has a second value, the PRB index in the PRB mapping for the PUCCH is counted in decreasing order from an upper edge of the RedCap specific initial UL BWP.

7. A User Equipment, UE, with reduced capability, RedCap, comprising:

at least one processor; and
at least one computer memory storing instructions that, when executed by the at least one processor, cause the UE to perform operations comprising:

receiving, from a Base Station, BS, system information, wherein the system information includes information related to common physical uplink control channel, PUCCH, configuration;
transmitting, to the BS, a PUCCH based on the common PUCCH configuration before receiving dedicated PUCCH configuration,
wherein the common PUCCH configuration includes:

i) first information related to a PUCCH resource sets associated with a physical resource block, PRB, offset;
ii) second information related to an additional PRB offset; and
iii) third information for determining a PRB index in a PRB mapping for the PUCCH within a RedCap specific initial uplink, UL, bandwidth part, BWP.

8. The UE of claim 7, wherein the system information includes information related to the RedCap specific initial UL BWP.

9. The UE of claim 7 or 8, wherein transmitting the PUCCH comprises:

determining an PRB index for the PUCCH is based on the first information, the second information and the third information; and
transmitting the PUCCH based on the determined PRB index.

10. The UE of any one of claims 7 to 9, wherein, based on the common PUCCH configuration including the third information, frequency hopping for the PUCCH is disabled.

11. The UE of any one of claims 7 to 10, wherein, based on the third information has a first value, the PRB index in the PRB mapping for the PUCCH is counted in increasing order from a lower edge of the RedCap specific initial UL BWP.

12. The UE of any one of claims 7 to 11, wherein, based on the third information has a second value, the PRB index in the PRB mapping for the PUCCH is counted in decreasing order from an upper edge of the RedCap specific initial UL BWP.

13. A non-transitory computer readable storage medium comprising program instructions that, when executed by at least one processor, cause a User Equipment, UE, with reduced capability, RedCap, to perform operations comprising:

receiving, from a Base Station, BS, system information, wherein the system information includes information related to common physical uplink control channel, PUCCH, configuration;
transmitting, to the BS, a PUCCH based on the common PUCCH configuration before receiving dedicated PUCCH configuration,
wherein the common PUCCH configuration includes:

i) first information related to a PUCCH resource sets associated with a physical resource block, PRB, offset;
ii) second information related to an additional PRB offset; and
iii) third information for determining a PRB index in a PRB mapping for the PUCCH within a RedCap specific initial uplink, UL, bandwidth part, BWP.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Size depends on subcarrier spacing

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k,\bar{l})$
- In a resource block, $(k,l)$

$k = 0$

$l = 0$

$l = 14 \cdot 2^{\mu} - 1$

# FIG.4

# FIG.5

Resource grid

A carrier
(up to 3300 subcarriers, i.e., 275 RBs)

A BWP

1 RB=12 subcarrier

1 RE

1 subcarrier

1 Symbol

l=0 ·····

k=0

**FIG.6**

# FIG.7

**FIG.8**

(a)

(b)

## FIG.9

(a)

(b)

# FIG.10

UE | Network

UE capability enquiry (or request) ——SH102

UE capability information ——SH104

# FIG.11

PUSCH for normal UE

PUSCH for RedCap UE

1101          1102

Initial UL BWP

RedCap UE bandwidth

1 slot

## FIG.12

PUSCH for normal UE

PUSCH for RedCap UE

1201            1202

Initial UL BWP

RedCap UE bandwidth

RedCap UE assumes no FH

1 slot

## FIG.13

PUSCH for normal UE

PUSCH for RedCap UE

1301            1302

Initial UL BWP

RedCap UE bandwidth

RedCap UE assumes no FH

1 slot

# FIG.14

PUSCH for normal UE

PUSCH for RedCap UE

1401                    1402

Initial UL BWP

RedCap UE bandwidth

1 slot

# FIG.15

PUSCH for normal UE

PUSCH for RedCap UE

1501          1502

Initial UL BWP

RedCap UE bandwidth

MOD operation
(initial BWP size)

1 slot

# FIG.16

PUSCH for normal UE

PUSCH for RedCap UE

1601      1602

Mirroring

Initial UL
BWP

RedCap UE
bandwidth

1 slot

# FIG.17

PUCCH resource
for RedCap UE
(FH enabled)

RedCap UE bandwidth

PUCCH resource for
non-RedCap
(FH always enabled)

Initial UL BWP
for RedCap UE

Initial UL BWP for non-RedCap UE

Frequency

Carrier bandwidth

# FIG.18

# FIG.19

# FIG.20

PUCCH resource
for non-RedCap
(FH always enabled)
(2001)

PUCCH resource for
RedCap UE (FH disabled)
(2002)

Initial UL BWP
for RedCap UE

Initial UL BWP
for non-RedCap UE

Frequency

Slot

## FIG.21

PUCCH resource for RedCap UE (FH disabled) (2102)

| 8/9/10/11 | 0/1/2/3 |
| 12/13/14/15 | 4/5/6/7 |
| 8/9/10/11 | 8/9/10/11 |
| 12/13/14/15 | 12/13/14/15 |
| 4/5/6/7 | 4/5/6/7 |
| 0/1/2/3 | 0/1/2/3 |

PUCCH resource for non-RedCap (FH always enabled) (2101)

Initial UL BWP for RedCap UE

$RB_{BWP,R}^{offset}$

Initial UL BWP for non-RedCap UE

| 4/5/6/7 | 12/13/14/15 |
| 0/1/2/3 | 8/9/10/11 |

Frequency

Slot

# FIG.22

PUCCH resource
for non-RedCap
(FH always enabled)
(2201)

PUCCH resource for
RedCap UE (FH disabled)
(2202)

Initial UL BWP
for RedCap UE

Initial UL BWP
for non-RedCap UE

Frequency

Slot

**FIG.23**

# FIG.24

**FIG.25**

**FIG.26**

Terminal                                                    Base station

System information ◄――――――――――――――――――――― S2601

DCI scheduling a PDSCH ◄――――――――――――――― S2602

PDSCH ◄――――――――――――――――――――――――――――― S2603

HARQ-ACK information related to a PDSCH ――――► S2604

**FIG.27**

```
┌─────────────────────────────┐
│  Receive system information  │───S2701
└─────────────────────────────┘
              │
              ▼
┌─────────────────────────────┐
│ Receive DCI scheduling a PDSCH │───S2702
└─────────────────────────────┘
              │
              ▼
┌─────────────────────────────┐
│       Receive a PDSCH        │───S2703
└─────────────────────────────┘
              │
              ▼
┌─────────────────────────────┐
│  Transmit HARQ-ACK information │───S2704
│  related to a PDSCH on a PUCCH │
└─────────────────────────────┘
```

# FIG.28

```
┌─────────────────────────────────────┐
│    Transmit system information       │──── S2801
└─────────────────────────────────────┘
                  │
                  ▼
┌─────────────────────────────────────┐
│   Transmit DCI scheduling a PDSCH    │──── S2802
└─────────────────────────────────────┘
                  │
                  ▼
┌─────────────────────────────────────┐
│           Transmit a PDSCH           │──── S2803
└─────────────────────────────────────┘
                  │
                  ▼
┌─────────────────────────────────────┐
│     Receive HARQ-ACK information     │
│    related to a PDSCH on a PUCCH     │──── S2804
└─────────────────────────────────────┘
```

**FIG.29**